(19) **Europäisches Patentamt / European Patent Office / Office européen des brevets**

(11) **EP 4 301 037 A1**

(12) **EUROPEAN PATENT APPLICATION**
published in accordance with Art. 153(4) EPC

(43) Date of publication:
**03.01.2024 Bulletin 2024/01**

(21) Application number: **22779036.7**

(22) Date of filing: **30.03.2022**

(51) International Patent Classification (IPC):
**H04W 28/26** (2009.01)

(52) Cooperative Patent Classification (CPC):
**H04W 28/26; H04W 72/04; H04W 72/54**

(86) International application number:
**PCT/CN2022/084156**

(87) International publication number:
**WO 2022/206854 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2021 CN 202110341306**

(71) Applicant: **Vivo Mobile Communication Co., Ltd.
Dongguan, Guangdong 523863 (CN)**

(72) Inventors:
• **LIU, Siqi**
 **Dongguan, Guangdong 523863 (CN)**
• **JI, Zichao**
 **Dongguan, Guangdong 523863 (CN)**
• **WANG, Huan**
 **Dongguan, Guangdong 523863 (CN)**

(74) Representative: **Murgitroyd & Company
Murgitroyd House
165-169 Scotland Street
Glasgow G5 8PL (GB)**

(54) **SIDELINK RESOURCE PROCESSING METHOD AND APPARATUS, SIDELINK RESOURCE INDICATION METHOD AND APPARATUS, TERMINAL, AND NETWORK SIDE DEVICE**

(57) This application discloses a sidelink resource processing and indication method, an apparatus, a terminal, and a network-side device, which belongs to the field of communication technologies. The sidelink resource processing method includes: a terminal obtains a target sidelink object, first information about the target sidelink object meets a first condition, and the target sidelink object includes at least one of the following: a sensing window, a sensing resource, a selection window, and a candidate resource. The terminal performs resource sensing and/or resource selection on the target sidelink object.

A terminal obtains a target sidelink object, where first information about the target sidelink object satisfies a first condition, and the target sidelink object includes at least one of the following: a sensing window, a sensing resource, a selection window, and a candidate resource ⟶ 101

The terminal performs resource sensing and/or resource selection on the target sidelink object ⟶ 102

**FIG. 6**

**Description**

**CROSS-REFERENCE TO RELATED APPLICATION**

This application claims the priority of Chinese Patent Application No. 202110341306.3 filed in China on March 30, 2021, the entire content of which is hereby incorporated by reference.

**TECHNICAL FIELD**

This application relates to the field of communication technologies, and in particular, to a sidelink resource processing and indication method, an apparatus, a terminal, and a network-side device.

**BACKGROUND**

Some sidelink (Sidelink, SL) terminals (User Equipment, UE) may have poor battery life, so that the sidelink terminals may obtain transmission resources in a random selection mode. However, if excessive SL UEs use random selection, a probability that a resource conflict occurs in a system increases, which is not conducive to system performance; if all SL UEs are forced to perform sensing (sensing) before selecting resources, power consumption is also increased.

**SUMMARY**

Embodiments of this application provide a sidelink resource processing and indication method, an apparatus, a terminal, and a network-side device, which can achieve a good balance between power consumption of the terminal and performance of a communication system.

According to a first aspect, an embodiment of this application provides a sidelink resource processing method, and the method includes:

A terminal obtains a target sidelink object, where first information about the target sidelink object meets a first condition, and the target sidelink object includes at least one of the following: a sensing window, a sensing resource, a selection window, and a candidate resource; and

the terminal performs resource sensing and/or resource selection on the target sidelink object.

According to a second aspect, an embodiment of this application provides a sidelink resource indication method, and the method includes:

A network-side device configures a target sidelink object for a terminal, where the target sidelink object includes at least one of the following: a sensing window, a sensing resource, a selection window, and a candidate resource, and first information about the target sidelink object meets a first condition.

According to a third aspect, an embodiment of this application provides a sidelink resource processing apparatus, applied to a terminal, and the apparatus includes:

 an obtaining module, configured to obtain a target sidelink object, where first information about the target sidelink object meets a first condition, and the target sidelink object includes at least one of the following: a sensing window, a sensing resource, a selection window, and a candidate resource; and
 a processing module, configured to perform resource sensing and/or resource selection on the target sidelink object.

According to a fourth aspect, an embodiment of this application provides a sidelink resource indication apparatus, applied to a network-side device, and the apparatus includes:

a configuration module, configured to configure a target sidelink object for a terminal, where the target sidelink object includes at least one of the following: a sensing window, a sensing resource, a selection window, and a candidate resource, and first information about the target sidelink object meets a first condition.

According to a fifth aspect, a terminal is provided. The terminal includes a processor, a memory, and a program or instructions stored in the memory and executable on the processor, the program or the instructions, when executed by the processor, implementing steps of the method according to the first aspect.

According to a sixth aspect, a terminal is provided. The terminal includes a processor and a communication interface, where the communication interface is configured to obtain a target sidelink object, first information about the target sidelink object meets a first condition, and the target sidelink object includes at least one of the following: a sensing window, a sensing resource, a selection window, and a candidate resource; and the processor is configured to perform resource sensing and/or resource selection on the target sidelink object.

According to a seventh aspect, a network-side device is provided. The network-side device includes a processor, a memory, and a program or instructions stored in the memory and executable on the processor, the program or the instructions, when executed by the processor, implementing steps of the method according to the second aspect.

According to an eighth aspect, a network-side device is provided. The network-side device includes a processor and a communication interface. The communication interface is configured to configure a target sidelink object for a terminal, where the target sidelink object includes at least one of the following: a sensing window, a sensing resource, a selection window, and a candidate resource, and first information about the target sidelink object meets a first condition.

According to a ninth aspect, a readable storage medium is provided. The readable storage medium stores a program or instructions, the program or the instructions, when executed by a processor, implementing steps of the method according to the first aspect, or implementing steps of the method according to the second aspect.

According to a tenth aspect, a chip is provided. The chip includes a processor and a communication interface, where the communication interface is coupled to the processor, and the processor is configured to run a program or instructions, to implement the method according to the first aspect, or implement the method according to the second aspect.

According to an eleventh aspect, a computer program/program product is provided, where the computer program/program product is stored in a storage medium, and the program/program product is executed by at least one processor to implement steps of the method according to the first aspect or the second aspect.

According to a twelfth aspect, a communication device is provided. The communication device is configured to implement steps of the method according to the first aspect or the second aspect.

In the embodiments of this application, a terminal obtains a target sidelink object, and first information about the target sidelink object meets a first condition. The terminal performs resource sensing and/or resource selection on the target sidelink object, and the first condition may be that a duration between a selection window and a sensing window needs to include at least a required processing time, so that a good balance can be achieved between power consumption of the terminal and performance of a communication system.

## BRIEF DESCRIPTION OF THE DRAWINGS

FIG. 1 is a schematic diagram of a wireless communication system;
FIG. 2 is a schematic diagram of performing measurement in a sensing window;
FIG. 3 is a schematic diagram of partial sensing;
FIG. 4 is a schematic diagram of a short term sensing window;
FIG. 5 is a schematic diagram of re-evaluation for performing resource selection;
FIG. 6 is a schematic flowchart of a sidelink resource processing method according to an embodiment of this application;
FIG. 7 is a schematic flowchart of a sidelink resource indication method according to an embodiment of this application;
FIG. 8 is a schematic diagram of a sensing window and a selection window according to an embodiment of this application;
FIG. 9 is a schematic structural diagram of a sidelink resource processing apparatus according to an embodiment of this application;
FIG. 10 is a schematic structural diagram of a sidelink resource indication apparatus according to an embodiment of this application;
FIG. 11 is a schematic structural diagram of a communication device according to an embodiment of this application;
FIG. 12 is a schematic composition diagram of a terminal according to an embodiment of this application; and
FIG. 13 is a schematic composition diagram of a network-side device according to an embodiment of this application.

## DETAILED DESCRIPTION

The following clearly and completely describes the technical solutions in the embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application fall within the protection scope of this application.

The specification and claims of this application, and terms "first" and "second" are used to distinguish similar objects, but are unnecessarily used to describe a specific sequence or order. It should be understood that the terms in such a way are interchangeable in proper circumstances, so that the embodiments of this application can be implemented in other orders than the order illustrated or described herein. Objects distinguished by "first", "second", and the like are usually one type, and the number of objects is not limited. For example, the first object may be one or more than one. In addition, in the specification and the claims, "and/or" represents at least one of the connected objects, and the character "/" generally represents an "or" relationship between the associated objects.

It should be noted that, the technologies described in the embodiments of this application are not limited to a Long Term Evolution (Long Term Evolution, LTE) system or an LTE-Advanced (LTE-Advanced, LTE-A) system, and may further be applied to other wireless communication systems, such as, Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and other systems. The terms "system" and "network" in the embodiments of this application are often used interchangeably, and the described technology can be used not only for the above systems and radio technologies, but also for other systems and radio technologies. The following description describes a new radio (New Radio, NR) system for example objectives, and NR terms are used in most of the description below, although these technologies are also applicable to applications other than NR system applications, such as a 6-th generation (6-th Generation, 6G) communication system.

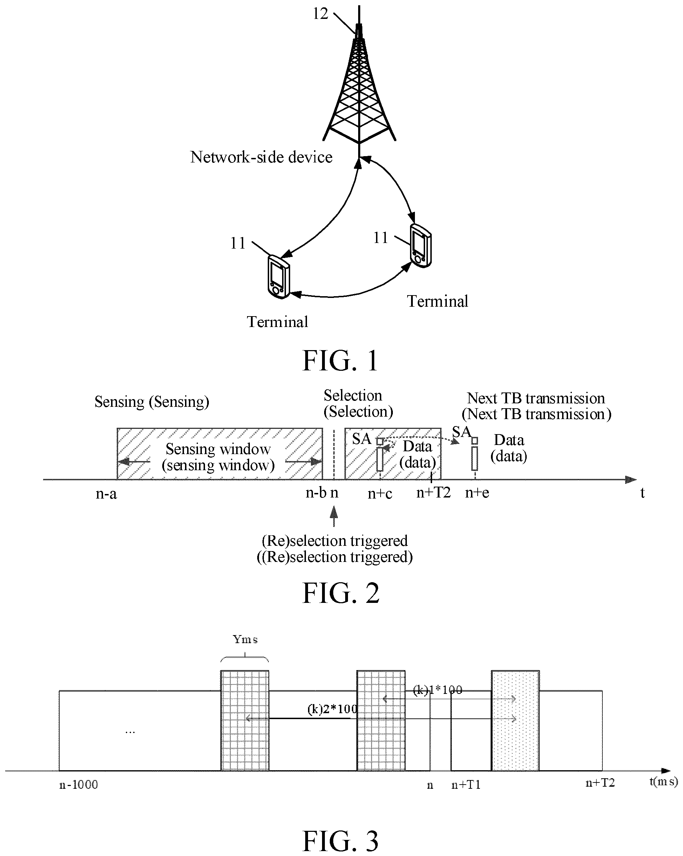

FIG. 1 is a block diagram of a wireless communication system to which an embodiment of this application can be applied. The wireless communication system includes a terminal 11 and a network-side device 12. The terminal 11 may also be referred to as a terminal device or a user terminal (User Equipment, UE). The terminal 11 may be, for example, a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer,UMPC), a mobile Internet device (Mobile Internet Device, MID), a wearable device (Wearable Device), an in-vehicle device (VUE), or a pedestrian terminal (PUE). The wearable device includes: It should be noted that a specific type of the terminal 11 is not limited in the embodiments of this application. The network-side device 12 may be a base station or a core network, where the base station may be referred to as a Node B, an evolved Node B, an access point, a base transceiver station (Base Transceiver Station, BTS), a radio base station, a radio transceiver, a basic service set (Basic Service Set, BSS), an extended service set (Extended Service Set, ESS), a Node B, an evolved Node B (eNB), a home Node B, a home evolved Node B, a wireless local area network (Wireless Local Area Networks, WLAN) access point, a wireless fidelity (Wireless Fidelity, WiFi) node, a transmitting receiving point (Transmitting Receiving Point, TRP) or some other suitable terms in the field. As long as the same technical effect is achieved, the base station is not limited to a specific technical word. It should be noted that, only a base station in a NR system is used as an example in the embodiments of this application, but a specific type of the base station is not limited. The core network device may be a location management device, for example, a location management function (Location Management Function, LMF), or an enhanced serving mobile location center (Enhanced Serving Mobile Location Center, E-SLMC).

A basic working principle of LTE sidelink sensing is as follows:
Measurement is performed within a sensing window, a scheduling assignment (scheduling assignment, SA) is demodulated and an interference measurement is performed within each sensing transmission time interval (Transmission Time Interval, TTI). The UE performs resource selection based on the following steps:
Exclude a resource for UE to send data.

The terminal demodulates a received SA to obtain a resource reserved by another UE, and excludes the resource reserved by another UE.

Perform energy sensing in the sensing window, measure a reference signal strength indication (reference signal strength indication, RSSI), and exclude a resource with large interference based on a measurement result.

Within the selection window, a subframe (subframe) is randomly selected from the 20% resource with a minimum interference for periodic resource reservation.

FIG. 2 is a schematic diagram of LTE SL performs sensing. Next TB transmission is a next transport block transmission, and (Re) selection triggered is triggering selection or re-selection.

Part of the sensing in LTE vehicle to everything (Vehicle to X, V2X) is mainly designed for power saving, to support pedestrian to vehicle (Pedestrian to Vehicle, P2V) communication, and pedestrian user (Pedestrian UE, PUE) supports two modes of resource selection. One is random resource selection, and the other is to perform partial sensing first, select a resource based on a result of the partial sensing, and perform semi-static resource reservation. Which mode the PUE chooses is configured for radio resource control (Radio Resource Control, RRC). When the RRC is configured to support two modes of resource selection, a PUE implementation decides which resource selection to adopt.

Specifically, a manner in which the terminal performs partial sensing and resource selection is shown in FIG. 3.

A PUE sensing window is a window of a lattice-filled part within a range of [n-1000, n], lengths Y and k are parameters configured by RRC, and a value range of k may be {1,2,3,..., 10}. A dot-filled part of a window within [n+T1, n+T2] is a selection window of the PUE configured by a higher layer. The PUE performs sensing on sidelink control information (Sidelink Control Information, SCI) sent by another terminal in the sensing window (the lattice-filled part), and estimates a resource reservation status of another terminal in the selection window (the dot-filled part) based on a sensed SCI and a reserved period. The PUE may exclude resources that do not meet a condition in the sensing window based on the information. At least 20% of the remaining resources (20% of a window length Y) are selected as a candidate resource set, and reported to a media access control (Media Access Control, MAC) layer. The MAC layer randomly selects a resource from the candidate resource set as a candidate resource of the PUE. The PUE performs cycle reservation on the selected resource, and the reserved period is indicated in the SCI.

If a user makes a random selection, the resource is randomly selected within the selection window in FIG. 3, and no sensing is required.

In a mode 2 (Mode 2) resource allocation mode, resource selection based on sensing is supported. A principle of the resource selection is similar to a sensing mechanism in LTE SL mode4. A specific working manner is as follows: 1) After a resource selection is triggered, a transmit UE (Transmit UE, TX UE) determines a resource selection window. 2) Before the resource selection, the UE needs to determine a candidate resource set (candidate resource set) for the resource selection, and compares reference signal receiving power (Reference Signal Receiving Power, RSRP) measured based on a resource in the resource selection window with a corresponding RSRP threshold. If the RSRP is lower than the RSRP threshold, the resource may be included in the candidate resource set. 3) After the resource set is determined, the UE randomly selects transmission resources from the candidate resource set. In addition, the UE may reserve transmission resources for next transmission during current transmission.

In a relevant NR SL, the TX UE performs resource reservation on resources allocated by itself (reservation is divided into periodic reservation and aperiodic reservation), and the reserved resources are used for future physical sidelink control channel (Physical Sidelink Control Channel, PSCCH) and/or physical sidelink shared channel (Physical Sidelink Shared Channel, PSSCH) transmission. The aperiodic reservation may be implemented through a time resource assignment (Time resource assignment) domain in the SCI, and the reserved resources may be used at least for the transmission of a same transport block (Transport Block, TB). The periodic reservation may be implemented through a resource reservation period (Resource reservation period) domain in the SCI, and periodic resources reserved in a current period may be used for the transmission of a next TB.

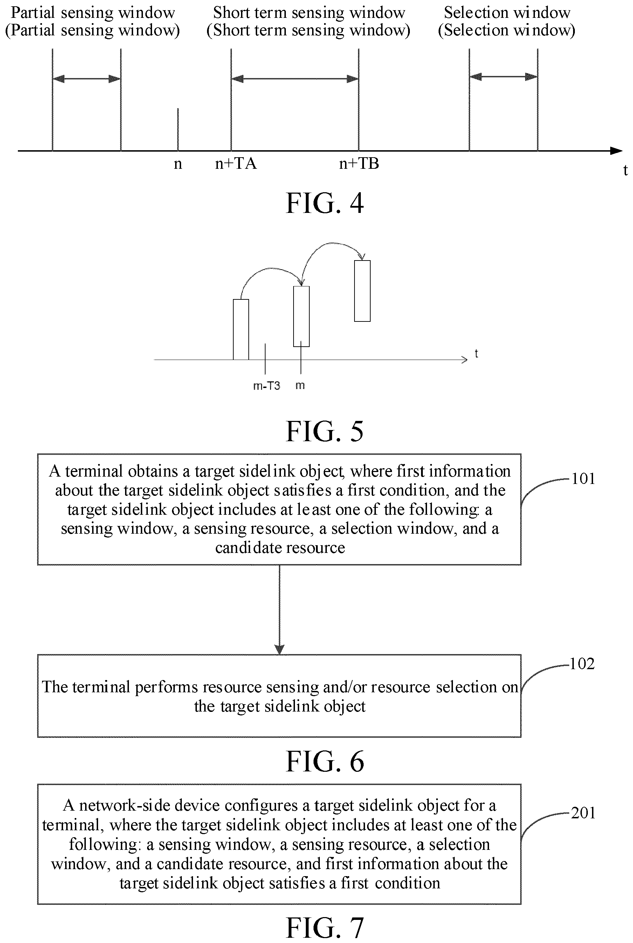

In the NR, in addition to performing sensing on a periodic sensing window or a periodic senisng occasion corresponding to a partial sensing, as shown in FIG. 4, the UE may still be required to perform sensing (which is referred to as short terming sensing, and a short term sensing window, which may also be referred to as continuous sensing, extra sensing, aperiodic sensing) within a period of time $[n+T_A, n+T_B]$, where $T_A$ and $T_B$ may be positive numbers, negative numbers, or 0.

In a Mode 2 resource allocation mode, a resource pre-emption (pre-emption) mechanism is supported, and a brief description of the mechanism is as follows. The resource reserved/selected by a UE overlaps (partially overlaps) with a resource reserved/selected by another UE with a higher priority service, if a SL-RSRP measurement value of the UE on a relevant resource is greater than a certain associated (associated) SL-RSRP threshold, the UE triggers resource re-selection. The service priority and the SL-RSRP threshold are determined by TB transmission on the resource.

In order for the UE to determine whether the reserved/selected resource (PSCCH/PSSCH resources) is preempted, as shown in FIG. 5, the UE re-evaluates the resource selection at least at 'm-T3' moment, where 'm' is a moment at which the resource is located or a moment at which resource reservation information is sent, and T3 includes at least duration for the UE to perform resource selection processing.

Time is required for preparations of channel/signal decoding, channel/signal transmission, resource selection, and the like, and these time may be related to a sub-carrier spacing (sub-carner spacing, SCS) of transmission in the following, for example:

1. Time required for decoding SCI is shown in Table 1:

Table 1

| $T_{proc,0}^{SL}$ depends on SCS | |
|---|---|
| $\mu_{SL}$ | $T_{proc,0}^{SL}[slots]$ |
| 0 | 1 |
| 1 | 1 |
| 2 | 2 |
| 3 | 4 |

2. Time required for resource selection/resource re-selection is shown in Table 2:

Table 2

| $T_{proc,1}^{SL}$ depends on SCS | |
|---|---|
| $\mu_{SL}$ | $T_{proc,1}^{SL}[slots]$ |
| 0 | 3 |
| 1 | 5 |
| 2 | 9 |
| 3 | 17 |

3. Congestion control processing time is shown in Table 3 and Table 4

Table 3: Congestion control processing time for processing timing capability 1 (Congestion control processing time for processing timing capability 1)

| 9 | Congestion control processing time N [slots] |
|---|---|
| 0 | 2 |
| 1 | 2 |
| 2 | 4 |
| 3 | 8 |

Table 4: Congestion control processing time for processing timing capability 2 (Congestion control processing time for processing timing capability 2)

| 9 | Congestion control processing time N [slots] |
|---|---|
| 0 | 2 |
| 1 | 4 |
| 2 | 8 |
| 3 | 16 |

4. PSSCH data transmission preparation time is shown in Table 5:

Table 5: PSSCH data transmission rearation time (nrenaration time)

| $\mu$ | PSSCH preparation time N2 [symbols] |
|---|---|
| 0 | 10 |
| 1 | 12 |
| 2 | 23 |
| 3 | 36 |

5. Preparation time $T_{prep}$ for reporting on PUCCH or PUSCH is calculated by the following formula:

$$T_{prep} = (N + 1) \cdot (2048 + 144) \cdot \kappa \cdot 2^{-\mu} \cdot T_c$$

Table 6: a value of N

| μ | N |
|---|---|
| 0 | 14 |
| 1 | 18 |
| 2 | 28 |
| 3 | 32 |

An embodiment of this application provides a sidelink resource processing method. As shown in FIG. 6, the method includes:

Step 101: A terminal obtains a target sidelink object, where first information about the target sidelink object meets a first condition, and the target sidelink object includes at least one of the following: a sensing window, a sensing resource, a selection window, and a candidate resource.

Step 101: The terminal performs resource sensing and/or resource selection on the target sidelink object.

The target sidelink object used for resource sensing and/or resource selection needs to meet a condition of the first condition. The first condition may be determined by the terminal itself, or may be ensured by a network-side device reasonably configuring the terminal.

In the embodiments of this application, a terminal obtains a target sidelink object, and first information about the target sidelink object meets a first condition. The terminal performs resource sensing and/or resource selection on the target sidelink object, and the first condition may be that a duration between a selection window and a sensing window needs to include at least required processing time, so that a good balance can be achieved between power consumption of the terminal and performance of a communication system.

In some embodiments, the first information includes at least one of the following:

a length of a time domain occupied by the target sidelink object;

a maximum length of a time domain occupied by the target sidelink object;

a minimum length of a time domain occupied by the target sidelink object;

a quantity of resources of the target sidelink object;

a maximum quantity of resources of the target sidelink object;

a minimum quantity of resources of the target sidelink object;

a start location of the target sidelink object, for example, a starting offset $T_A$, $n+T_A$, a maximum starting offset max $T_A$, max $(n+T_A)$, and a minimum starting offset min $T_A$, min $(n+T_A)$. Information about the start location includes a time domain position of the start location, and/or, $T_A$ is a positive number, a negative number, or 0, where n is a time for triggering resource selection or resource re-selection or resource pre-emption or resource re-evaluation, and $n+T_A$ may be a start location of at least one of a sensing window, a sensing resource, a selection window, or a candidate resource;

an earliest resource of the target sidelink object, for example, a starting offset $T_A$, $n+T_A$, a maximum starting offset max $T_A$, max $(n+T_A)$, and a minimum starting offset min $T_A$, min $(n+T_A)$. Information about the start location includes a time domain position of the start location, and/or, $T_A$ is a positive number, a negative number, or 0, where n is a time for triggering resource selection or resource re-selection or resource pre-emption or resource re-evaluation, and $n+T_A$ may be an earliest resource of at least one of a sensing window, a sensing resource, a selection window, and a candidate resource;

information about an earliest moment of the target sidelink object, for example, a starting offset $T_A$, $n+T_A$, a maximum starting offset max $T_A$, max $(n+T_A)$, and a minimum starting offset min $T_A$, min $(n+T_A)$, where n is a time for triggering resource selection or resource re-selection or resource pre-emption or resource re-evaluation, and $n+T_A$ may be an earliest moment of at least one of a sensing window, a sensing resource, a selection window, and a candidate resource; a starting offset of the target sidelink object;

an end location of the target sidelink object, for example, an end offset $T_B$, $n+T_B$, a maximum end offset max $T_B$, max $(n+T_B)$, and a minimum end offset min $T_B$, min $(n+T_B)$. Information about the end location includes a time domain position of the end location, and/or, $T_B$ is a positive number, a negative number, or 0, where n is a time for triggering resource selection or resource re-selection or resource pre-emption or resource re-evaluation, and $n+T_B$ may be an end location of at least one of a sensing window, a sensing resource, a selection window, and a candidate resource;

a latest resource of the target sidelink object, for example, an end offset $T_B$, $n+T_B$, a maximum end offset max $T_B$, max $(n+T_B)$, and a minimum end offset min $T_B$, min $(n+T_B)$. Information about the end location includes a time domain position of the end location, and/or, $T_B$ is a positive number, a negative number, or 0, where n is a time for triggering resource selection or resource re-selection or resource pre-emption or resource re-evaluation, and $n+T_B$ may be a latest resource of at least one of a sensing window, a sensing resource, a selection window, and a candidate resource;

information about a latest moment of the target sidelink object, for example, an end offset $T_B$, $n+T_B$, a maximum end offset max $T_B$, max $(n+T_B)$, and a minimum end offset min $T_B$, min $(n+T_B)$, where n is a time for triggering resource selection or resource re-selection or resource pre-emption or resource re-evaluation, and $n+T_A$ may be a latest moment of at least one of a sensing window, a sensing resource, a selection window, and a candidate resource; and

an end location offset of the target sidelink object.

The foregoing resource may be a time domain resource. For example, a slot, and a quantity of resources is a quantity of slots. For example, a mini slot, and a quantity of resources is a quantity of mini slots. For example, a symbol, and a quantity of resources is a quantity of symbols. For example, ms, and a quantity of resources is a quantity of ms. For example, a cycle, and a quantity of resources is a quantity of cycles.

In some embodiments, in a case that the terminal obtains first sub-information and second sub-information, the first sub-information includes information about the sensing window and/or the sensing resource, the second sub-information includes information about the selection window and/or the selected resource, and the first information adopts at least one of the following:

a minimum value in the first sub-information and the second sub-information;
a maximum value in the first sub-information and the second sub-information; and
a weighted sum of the first sub-information and the second sub-information.

The first sub-information includes at least one of the following:

a length of a time domain occupied by the target sidelink object;
a maximum length of a time domain occupied by the target sidelink object;
a minimum length of a time domain occupied by the target sidelink object;
a quantity of resources of the target sidelink object;
a maximum quantity of resources of the target sidelink object;
a minimum quantity of resources of the target sidelink object;
a start location of the target sidelink object;
an earliest resource of the target sidelink object;
information about an earliest moment of the target sidelink object;
a starting offset of the target sidelink object;
an end location of the target sidelink object;
a latest resource of the target sidelink object;
information about a latest moment of the target sidelink object; and
an end location offset of the target sidelink object.

The second sub-information includes at least one of the following:

a length of a time domain occupied by the target sidelink object;
a maximum length of a time domain occupied by the target sidelink object;
a minimum length of a time domain occupied by the target sidelink object;
a quantity of resources of the target sidelink object;
a maximum quantity of resources of the target sidelink object;
a minimum quantity of resources of the target sidelink object;
a start location of the target sidelink object;
an earliest resource of the target sidelink object;
information about an earliest moment of the target sidelink object;
a starting offset of the target sidelink object;
an end location of the target sidelink object;
a latest resource of the target sidelink object;
information about a latest moment of the target sidelink object; and
an end location offset of the target sidelink object.

In some embodiments, the first condition includes at least one of the following:

a duration between a start location of a first resource and a first moment is not less than first preset processing duration;

a duration between an earliest resource of a first resource and a first moment is not less than first preset processing duration;

a duration between an earliest moment of a first resource and a first moment is not less than first preset processing duration;

a duration between a start location of a second resource and a second moment is not less than second preset processing duration;

a duration between an earliest resource of a second resource and a second moment is not less than second preset processing duration;

a duration between an earliest moment of a second resource and a second moment is not less than second preset processing duration;

a duration between an end location of a first resource and a third moment is not less than third preset processing duration;

a duration between a latest resource of a first resource and a third moment is not less than third preset processing duration;

a duration between a latest moment of a first resource and a third moment is not less than third preset processing duration;

a duration between an end location of a second resource and a fourth moment is not less than fourth preset processing duration;

a duration between a latest resource of a second resource and a fourth moment is not less than fourth preset processing duration; or

a duration between a latest moment of a second resource and a fourth moment is not less than fourth preset processing duration, where

a sidelink resource includes the first resource and/or the second resource, the first resource includes the sensing window and/or the sensing resource, and the second resource includes the selection window and/or the candidate resource.

In some embodiments, in a case that at least part of the first resource do not meet at least one of the following conditions, the at least part of the first resource that do not meet the conditions are dropped:

a duration between a start location of a first resource and a first moment is not less than first preset processing duration;

a duration between an earliest resource of a first resource and a first moment is not less than first preset processing duration;

a duration between an earliest moment of a first resource and a first moment is not less than first preset processing duration;

a duration between an end location of a first resource and a third moment is not less than third preset processing duration;

a duration between a latest resource of a first resource and a third moment is not less than third preset processing duration; or

the duration between the latest moment of the first resource and the third moment is not less than the third preset processing duration.

In some embodiments, in a case that at least part of the second resource do not meet at least one of the following conditions, the at least part of the second resource that do not meet the conditions are dropped:

a duration between a start location of a second resource and a second moment is not less than second preset processing duration;

a duration between an earliest resource of a second resource and a second moment is not less than second preset processing duration;

a duration between an earliest moment of a second resource and a second moment is not less than second preset processing duration;

a duration between an end location of a second resource and a fourth moment is not less than fourth preset processing duration;

a duration between a latest resource of a second resource and a fourth moment is not less than fourth preset processing duration; or

the duration between the latest moment of the second resource and the fourth moment is not less than the fourth preset processing duration.

In some embodiments, the first moment adopts at least one of the following:

a fifth moment, located after a moment n, where duration between the fifth moment and the moment n is a packet delay budget PDB, in this way, in a case that a candidate resource exceeds this moment, transmission times out;

a sixth moment, located after a moment n, where duration between the sixth moment and the moment n is a remaining PDB, in this way, in a case that a candidate resource exceeds this moment, transmission times out;

a moment when resource selection is triggered, that is, in a case that a resource causes transmission to time out, a moment when a new resource selection procedure is triggered, for example, a moment when a new resource selection is triggered, a moment when a first resource selection is triggered, a moment when a kth resource selection is triggered, and k is an integer greater than 1;

a moment when resource re-selection is triggered, that is, in a case that a resource causes transmission to time out, a moment when a new resource re-selection procedure is triggered;

an earliest moment when resource selection is triggered, that is, in a case that a resource causes transmission to times out, an earliest moment when a new resource selection procedure is triggered, for example, an earliest moment when a new resource selection is triggered, an earliest moment when a first resource selection is triggered, and an earliest moment when a kth resource selection is triggered;

an earliest moment when resource re-selection is triggered, that is, in a case that a resource causes transmission to time out, an earliest moment when a new resource re-selection procedure is triggered;

a latest moment when resource selection is triggered, that is, in a case that a resource causes transmission to time out, a latest moment when a new resource selection procedure is triggered, for example, a latest moment when a new resource selection is triggered, a latest moment when a first resource selection is triggered, and a latest moment when a kth resource selection is triggered;

a latest moment when resource re-selection is triggered, that is, in a case that a resource causes transmission to time out, a latest moment when a new resource re-selection procedure is triggered;

a moment when resource dropping is triggered, that is, in a case that a resource causes transmission to time out, a moment when resource dropping is triggered;

an earliest moment when resource dropping is triggered, that is, in a case that a resource causes transmission to time out, an earliest moment when resource dropping is triggered;

a latest moment when resource dropping is triggered, that is, in a case that a resource causes transmission to time out, a latest moment when resource dropping is triggered, where

moment information corresponding to the second resource, where the moment information includes one of the following: the start location, the earliest resource, the earliest moment, the end location, the latest resource, and the latest moment.

In some embodiments, the second moment or the fourth moment is moment information corresponding to the first resource, where the moment information includes one of the following: the start location, the earliest resource, the earliest moment, the end location, the latest resource, and the latest moment.

In some embodiments, the third moment adopts one of the following:

a fifth moment, located after a moment n, where duration between the fifth moment and the moment n is a packet delay budget PDB, in this way, in a case that a candidate resource exceeds this moment, transmission times out;

a sixth moment, located after a moment n, where duration between the sixth moment and the moment n is a remaining PDB, in this way, in a case that a candidate resource exceeds this moment, transmission times out;

a moment when resource selection is triggered, that is, in a case that a resource causes transmission to time out, a moment when a new resource selection procedure is triggered, for example, a moment when a new resource selection is triggered, a moment when a first resource selection is triggered, a moment when a kth resource selection is triggered, and k is an integer greater than 1;

a moment when resource re-selection is triggered, that is, in a case that a resource causes transmission to time out, a moment when a new resource re-selection procedure is triggered;

an earliest moment when resource selection is triggered, that is, in a case that a resource causes transmission to times out, an earliest moment when a new resource selection procedure is triggered, for example, an earliest moment when a new resource selection is triggered, an earliest moment when a first resource selection is triggered, and an earliest moment when a kth resource selection is triggered;

an earliest moment when resource re-selection is triggered, that is, in a case that a resource causes transmission to time out, an earliest moment when a new resource re-selection procedure is triggered;

a latest moment when resource selection is triggered, that is, in a case that a resource causes transmission to time out, a latest moment when a new resource selection procedure is triggered, for example, a latest moment when a new resource selection is triggered, a latest moment when a first resource selection is triggered, and a latest moment when a kth resource selection is triggered;

a latest moment when resource re-selection is triggered, that is, in a case that a resource causes transmission to time out, a latest moment when a new resource re-selection procedure is triggered;

a moment when resource dropping is triggered, that is, in a case that a resource causes transmission to time out, a moment when resource dropping is triggered;

an earliest moment when resource dropping is triggered, that is, in a case that a resource causes transmission to time out, an earliest moment when resource dropping is triggered;

a latest moment when resource dropping is triggered, that is, in a case that a resource causes transmission to time out, a latest moment when resource dropping is triggered, where

moment information corresponding to the first resource, where the moment information includes one of the following: the start location, the earliest resource, the earliest moment, the end location, the latest resource, and the latest moment.

In some embodiments, at least one of the first preset processing duration, the second preset processing duration, the third preset processing duration, and the fourth preset processing duration includes at least one of the following, and/or, is not less than one of the following or a sum of at least two of the following:

first duration is greater than or equal to time required for decoding sidelink control information SCI or a physical sidelink control channel PSCCH; or

second duration is greater than or equal to time required for resource selection and/or resource re-selection.

Not less than the sum of at least one of the first duration and the second duration refers to not less than the first duration, or not less than the second duration, or not less than the sum of the first duration and the second duration.

A resource used for packet transmission cannot exceeds a delay condition, and sufficient time for decoding SCI and preparing resource selection needs to be ensured between a sensing moment and a packet resource. Therefore, a duration between the sensing window and the selection window needs to be ensured. Preferably, at least one of the second preset processing duration, the third preset processing duration, and the fourth preset processing duration includes the first duration and the second duration, or is not less than the sum of the first duration and the second duration, or is not less than the first duration, or is not less than the second duration, so as to ensure that there is sufficient time between the sensing window and the selection window for performing SCI decoding and resource selection preparation.

In some embodiments, the first preset processing duration further includes at least one of the following, and/or, is not less than one of the following or a sum of at least two of the following:

a length of a time domain occupied by the second resource;

a maximum length of a time domain occupied by the second resource;

a minimum length of a time domain occupied by the second resource;

a quantity of resources of the second resource;

a maximum quantity of resources of the second resource; and

a minimum quantity of resources of the second resource.

The first preset processing duration may include at least one of the foregoing, or may not be less than a sum of at least one of the foregoing.

In some embodiments, the second preset processing duration further includes at least one of the following, and/or, is not less than one of the following or a sum of at least two of the following:

a length of a time domain occupied by the first resource;

a maximum length of a time domain occupied by the first resource;

a minimum length of a time domain occupied by the first resource;

a quantity of resources of the first resource;

a maximum quantity of resources of the first resource; and

a minimum quantity of resources of the first resource.

The second preset processing duration may include at least one of the foregoing, or may not be less than a sum of at least one of the foregoing.

In some embodiments, the third preset processing duration and/or the fourth preset processing duration further include at least one of the following, and/or, are not less than one of the following or a sum of at least two of the following:

a length of a time domain occupied by the first resource;

a maximum length of a time domain occupied by the first resource;

a minimum length of a time domain occupied by the first resource;

a quantity of resources of the first resource;

a maximum quantity of resources of the first resource;

a minimum quantity of resources of the first resource;

a length of a time domain occupied by the second resource;

a maximum length of a time domain occupied by the second resource;

a minimum length of a time domain occupied by the second resource;

a quantity of resources of the second resource;

a maximum quantity of resources of the second resource; and

a minimum quantity of resources of the second resource.

The third preset processing duration and the fourth preset preset duration may include at least one of the foregoing, or may not be less than a sum of at least one of the foregoing.

In some embodiments, at least one of the first preset processing duration, the second preset processing duration, the third preset processing duration, and the fourth preset processing duration includes at least one of the following, and/or, is not less than one of the following or a sum of at least two of the following:

time required for decoding SCI;

time required for resource selection and/or resource re-selection;

congestion control processing time;

PSSCH data transmission preparation time; and

preparation time for reporting on a physical uplink control channel (Physical Uplink Control Channel, PUCCH) or a physical uplink shared channel (Physical Uplink Shared Channel, PUSCH).

In some embodiments, the first information is configured by a network-side device, or defined by a protocol, or pre-configured, or supported by the terminal, or determined based on a preset parameter.

When the first information is supported by the terminal, the first information may be a parameter value required or supported by the terminal itself. Optionally, the terminal may report the parameter value to the network-side device.

In some embodiments, the preset parameter adopts at least one of the following:

processing time of a specific channel or of a specific signal or of a specific operation;

determined based on a PDB, for example, a quantity of slots included in the sensing window is x*PDB, where x is an integer;

determined based on a remaining PDB;

a measurement quality, for example, at least one of an occupancy rate of a system and/or a carrier and/or a bandwidth part and/or a resource pool and/or a user and/or connection and/or a user group, an occupancy quality, a blocking rate, a blocking quality, an idle rate, an idle quality, a quantity of times of successful transmission, a successful transmission rate, a quantity of times of unsuccessful transmission, an unsuccessful transmission rate, a quantity of times of discontinuous transmission (Discontinuous Transmission, DTX), a DTX rate, a quantity of times of missing inspection, a missing inspection rate, a quantity of times of false sensing, a false sensing rate, a quantity of times of retransmission, a retransmission rate, a channel busy ratio (Channel Busy Ratio, CBR), a channel occupancy ratio (Channel Occupancy Ratio, CR), a quantity of times of receiving or sending acknowledgement (Acknowledgement, ACK), a quantity of times of receiving or sending negative acknowledgement (Negative Acknowledgement, NACK), a RSRP, a RSSI, and a reference signal receiving quality (Reference Signal Receiving Quality, RSRQ);

a statistic quantity, for example, at least one of an occupancy rate of a system and/or a carrier and/or a bandwidth part and/or a resource pool and/or a user and/or connection and/or a user group, an occupancy quality, a blocking rate, a blocking quality, an idle rate, an idle quality, a quantity of times of successful transmission, a successful transmission rate, a quantity of times of unsuccessful transmission, an unsuccessful transmission rate, a quantity of times of DTX, a DTX rate, a quantity of times of missing inspection, a missing inspection rate, a quantity of times of false sensing, a false sensing rate, a quantity of times of retransmission, a retransmission rate, a CBR, a CR, a quantity of times of receiving or sending ACK, a quantity of times of receiving or sending NACK, a RSRP, a RSSI, and a RSRQ;

determined based on a geographic location;

determined based on quality of service QOS;

determined based on a priority, different priorities correspond to different value ranges, for example, a length of the sensing window corresponding to priority 1 is a, for example, a length of the sensing window corresponding to priority 2 is b, for example, a start location of the sensing window corresponding to priority 1 is TA<0, for example, a start location of the sensing window corresponding to priority 2 is TA>0;

determined based on a communication distance;

a cast type, including broadcast/groupcast/unicast;

determined based on whether there is a radio resource control RRC connection;

determined based on whether the terminal obtains a scheduled or recommended resource;

determined based on a relationship between a first time point and a discontinuous reception DRX configuration, where the first time point is a time point at which resource selection or resource re-selection or resource re-evaluation or resource pre-emption is triggered;

determined based on a configuration of a logical channel;

determined based on a configuration of higher layer signaling;

determined based on a hybrid automatic repeat request HARQ configuration; or

determined based on a power saving configuration.

In some embodiments, when a value or a value range or content of the preset parameter is different, a value of the first information is also different. For example, when the value of the preset parameter is 1, the value of the first information is A, and a length of the selection window is Y1. For another example, when the value of the preset parameter is 2, the value of the first information is A, and the length of the selection window is Y2.

In some embodiments, the sensing window is a short term sensing window, that is $[n+T_A, n+T_B]$, and/or the sensing resource is a resource within the short term sensing window.

In some embodiments, the sensing window includes a short term sensing window and a preset quantity of partial sensing windows, that is, a short term sensing window and K partial sensing window, where K is a positive integer, and/or the sensing resource is a resource within the sensing window. In a specific example, K may be one. In a specific example, K is K corresponding to the partial sensing window before slot n and closest to slot n.

The short term sensing window is for UE to perform sensing within a period of time $[n+T_A, n+T_B]$. $T_A$ and $T_B$ may be positive numbers, negative numbers, or 0.

An embodiment of this application further provides a sidelink resource processing method. As shown in FIG. 7, the method includes:

Step 201: A network-side device configures a target sidelink object for a terminal, where the target sidelink object includes at least one of the following: a sensing window, a sensing resource, a selection window, and a candidate resource, and first information about the target sidelink object meets a first condition.

In some embodiments, the first information includes at least one of the following:

a length of a time domain occupied by the target sidelink object;

a maximum length of a time domain occupied by the target sidelink object;

a minimum length of a time domain occupied by the target sidelink object;

a quantity of resources of the target sidelink object;

a maximum quantity of resources of the target sidelink object;

a minimum quantity of resources of the target sidelink object;

a start location of the target sidelink object;

an earliest resource of the target sidelink object;

information about an earliest moment of the target sidelink object;

a starting offset of the target sidelink object;

an end location of the target sidelink object;

a latest resource of the target sidelink object;

information about a latest moment of the target sidelink object; and

an end location offset of the target sidelink object.

In some embodiments, the method further includes:

The network-side device sends a first condition of the target sidelink object to the terminal, and the first condition includes at least one of the following:

a duration between a start location of a first resource and a first moment is not less than first preset processing duration;

a duration between an earliest resource of a first resource and a first moment is not less than first preset processing duration;

a duration between an earliest moment of a first resource and a first moment is not less than first preset processing duration;

a duration between a start location of a second resource and a second moment is not less than second preset processing duration;

a duration between an earliest resource of a second resource and a second moment is not less than second preset processing duration;

a duration between an earliest moment of a second resource and a second moment is not less than second preset processing duration;

a duration between an end location of a first resource and a third moment is not less than third preset processing duration;

a duration between a latest resource of a first resource and a third moment is not less than third preset processing duration;

a duration between a latest moment of a first resource and a third moment is not less than third preset processing duration;

a duration between an end location of a second resource and a fourth moment is not less than fourth preset processing duration;

a duration between a latest resource of a second resource and a fourth moment is not less than fourth preset processing duration; or

a duration between a latest moment of a second resource and a fourth moment is not less than fourth preset processing duration.

a sidelink resource includes the first resource and/or the second resource, the first resource includes the sensing window and/or the sensing resource, and the second resource includes the selection window and/or the candidate resource. In addition, in the embodiments of this application, to constrain TA and TB, at least one of the following needs to be guaranteed:

1. A duration between $n+T_B$ and a start location of the selection window is not less than processing duration specified in a protocol and/or configured processing duration and/or pre-configured processing duration and/or processing duration supported by UE (for example, a sum of duration required for decoding SCI and duration required for resource selection and/or resource re-selection, or $T_{proc,1}^{SL} + T_{proc,0}^{SL}$ ). Further, optionally, at least one of the following is met:

reference may be made to Table 2 for $T_{proc,1}^{SL}$ limitation; and

reference may be made to Table 1 for $T_{proc,0}^{SL}$ limitation.

2. A duration between $n+T_B$ and an end location of the selection window is not less than processing duration specified in a protocol and/or configured processing duration and/or pre-configured processing duration and/or processing duration supported by UE (for example, a sum of duration required for decoding SCI and duration required for resource selection and/or resource re-selection, or $T_{proc,1}^{SL} + T_{proc,0}^{SL}$ ). Further, optionally, at least one of the following is met:

reference may be made to Table 2 for $T_{proc,1}^{SL}$ limitation; and

reference may be made to Table 1 for $T_{proc,0}^{SL}$ limitation.

3. A duration between $n+T_B$ and an end location of the selection window is not less than processing duration specified in a protocol and/or configured processing duration and/or pre-configured processing duration and/or processing duration supported by UE (for example, a sum of duration required for decoding SCI, duration required for resource selection and/or resource re-selection, and minimum duration of the selection window).

4. A duration between $n+T_B$ and an end location of the selection window is not less than processing duration specified in a protocol and/or configured processing duration and/or pre-configured processing duration and/or processing duration supported by UE (for example, a sum of duration required for decoding SCI, duration required for resource selection and/or resource re-selection, and a minimum quantity of candidate resources).

5. A duration between $n+T_B$ and an (n+PDB) moment is not less than processing duration specified in a protocol and/or configured processing duration and/or pre-configured processing duration and/or processing duration supported by UE (for example, a sum of duration required for decoding SCI and duration required for resource selection and/or resource re-selection, or $T_{proc,1}^{SL} + T_{proc,0}^{SL}$ ). Further, optionally, at least one of the following is met:

reference may be made to Table 2 for $T_{proc,1}^{SL}$ limitation; and

reference may be made to Table 1 for $T_{proc,0}^{SL}$ limitation.

6. A duration between $n+T_B$ and an (n+PDB) moment is not less than processing duration specified in a protocol and/or configured processing duration and/or pre-configured processing duration and/or processing duration supported by UE (for example, a sum of duration required for decoding SCI, duration required for resource selection and/or resource re-selection, and minimum duration of the selection window).

7. A duration between $n+T_B$ and an (n+PDB) moment is not less than processing duration specified in a protocol and/or configured processing duration and/or pre-configured processing duration and/or processing duration supported by UE (for example, a sum of duration required for decoding SCI, duration required for resource selection and/or resource re-selection, and a minimum quantity of candidate resources).

8. A duration between n+TA and a start location of the selection window is not less than processing duration specified in a protocol and/or configured processing duration and/or pre-configured processing duration and/or processing duration supported by UE (for example, a sum of duration required for decoding SCI and duration required for resource selection and/or resource re-selection, or $T_{proc,1}^{SL} + T_{proc,0}^{SL}$ ). Further, optionally, at least one of the following is met:

reference may be made to Table 2 for $T_{proc,1}^{SL}$ limitation; and

reference may be made to Table 1 for $T_{proc,0}^{SL}$ limitation.

9. A duration between n+TA and a start location of the selection window is not less than processing duration specified in a protocol and/or configured processing duration and/or pre-configured processing duration and/or processing duration supported by UE (for example, a sum of duration required for decoding SCI, duration required for resource selection and/or resource re-selection, and minimum duration of the sensing window).

10. A duration between n+TA and a start location of the selection window is not less than processing duration specified in a protocol and/or configured processing duration and/or pre-configured processing duration and/or processing duration supported by UE (for example, a sum of duration required for decoding SCI, duration required for resource selection and/or resource re-selection, and a minimum quantity of sensing resources).

11. A duration between n+TA and an end location of the selection window is not less than processing duration specified in a protocol and/or configured processing duration and/or pre-configured processing duration and/or processing duration supported by UE (for example, a sum of duration required for decoding SCI and duration required for resource selection and/or resource re-selection, or $T_{proc,1}^{SL} + T_{proc,0}^{SL}$ ). Further, optionally, at least one of the following is met:

reference may be made to Table 2 for $T_{proc,1}^{SL}$ limitation; and

reference may be made to Table 1 for $T_{proc,0}^{SL}$ limitation.

12. A duration between $n+T_A$ and an end location of the selection window is not less than processing duration specified in a protocol and/or configured processing duration and/or pre-configured processing duration and/or processing duration supported by UE (for example, a sum of duration required for decoding SCI, duration required for resource selection and/or resource re-selection, and minimum duration of the sensing window).

13. A duration between $n+T_A$ and an end location of the selection window is not less than processing duration specified in a protocol and/or configured processing duration and/or pre-configured processing duration and/or processing duration supported by UE (for example, a sum of duration required for decoding SCI, duration required for resource selection and/or resource re-selection, and a minimum quantity of sensing resources).

14. A duration between $n+T_A$ and an end location of the selection window is not less than processing duration specified in a protocol and/or configured processing duration and/or pre-configured processing duration and/or processing duration supported by UE (for example, a sum of duration required for decoding SCI, duration required for resource selection and/or resource re-selection, and minimum duration of the selection window).

15. A duration between $n+T_A$ and an end location of the selection window is not less than processing duration specified in a protocol and/or configured processing duration and/or pre-configured processing duration and/or processing duration supported by UE (for example, a sum of duration required for decoding SCI, duration required for resource selection and/or resource re-selection, and a minimum quantity of candidate resources).

16. A duration between $n+T_A$ and an end location of the selection window is not less than a sum of duration required for decoding SCI, duration required for resource selection and/or resource re-selection, minimum duration of the sensing window, and minimum duration of the selection window.

17. A duration between $n+T_A$ and an end location of the selection window is not less than processing duration specified in a protocol and/or configured processing duration and/or pre-configured processing duration and/or processing duration supported by UE (for example, a sum of duration required for decoding SCI, duration required for resource selection and/or resource re-selection, a minimum quantity of sensing resources, and a minimum quantity of candidate resources).

18. A duration between $n+T_A$ and an (n+PDB) moment is not less than processing duration specified in a protocol and/or configured processing duration and/or pre-configured processing duration and/or processing duration supported by UE (for example, a sum of duration required for decoding SCI and duration required for resource selection and/or resource re-selection, or $T_{proc,1}^{SL} + T_{proc,0}^{SL}$ ). Further, optionally, at least one of the following is met:

reference may be made to Table 2 for $T_{proc,1}^{SL}$ limitation; and

reference may be made to Table 1 for $T_{proc,0}^{SL}$ limitation.

19. A duration between $n+T_A$ and an (n+PDB) moment is not less than processing duration specified in a protocol and/or configured processing duration and/or pre-configured processing duration and/or processing duration supported by UE (for example, a sum of duration required for decoding SCI, duration required for resource selection and/or resource re-selection, and minimum duration of the sensing window).

20. A duration between $n+T_A$ and an (n+PDB) moment is not less than processing duration specified in a protocol and/or configured processing duration and/or pre-configured processing duration and/or processing duration supported by UE (for example, a sum of duration required for decoding SCI, duration required for resource selection and/or resource re-selection, and a minimum quantity of sensing resources).

21. A duration between $n+T_A$ and an (n+PDB) moment is not less than processing duration specified in a protocol and/or configured processing duration and/or pre-configured processing duration and/or processing duration supported by UE (for example, a sum of duration required for decoding SCI, duration required for resource selection and/or resource re-selection, and minimum duration of the selection window).

22. A duration between $n+T_A$ and an (n+PDB) moment is not less than processing duration specified in a protocol and/or configured processing duration and/or pre-configured processing duration and/or processing duration supported by UE (for example, a sum of duration required for decoding SCI, duration required for resource selection and/or resource re-selection, and a minimum quantity of candidate resources).

23. A duration between $n+T_A$ and an (n+PDB) moment is not less than processing duration specified in a protocol and/or configured processing duration and/or pre-configured processing duration and/or processing duration supported by UE (for example, a sum of duration required for decoding SCI, duration required for resource selection and/or resource re-selection, minimum duration of the sensing window, and minimum duration of the selection window).

24. A duration between $n+T_A$ and an (n+PDB) moment is not less than processing duration specified in a protocol and/or configured processing duration and/or pre-configured processing duration and/or processing duration supported by UE (for example, a sum of duration required for decoding SCI, duration required for resource selection and/or resource re-selection, a minimum quantity of sensing resources, and a minimum quantity of candidate resources).

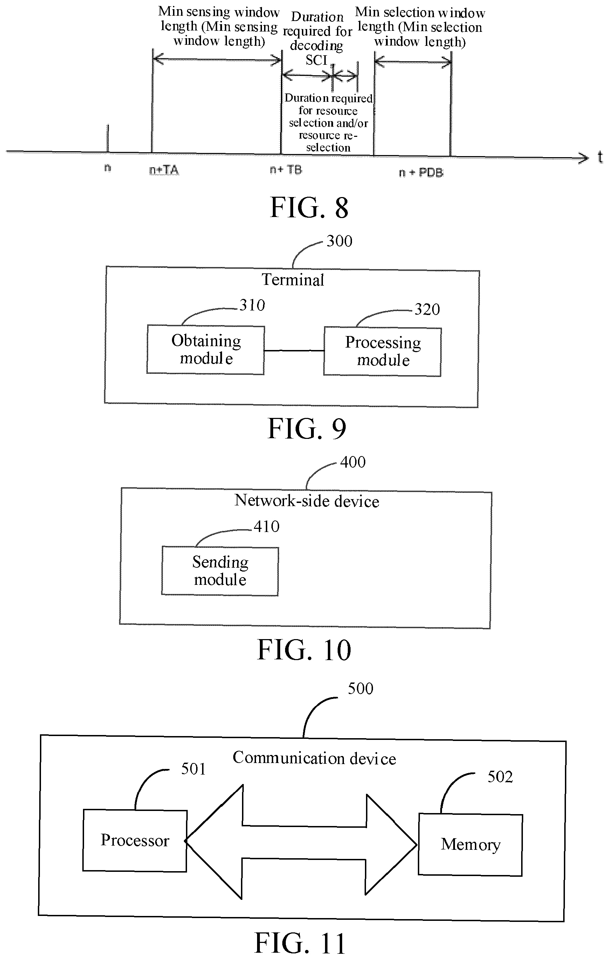

The foregoing PDB may be replaced with the remaining PDB, or may be replaced with another interpretation corresponding to a first moment, or a second moment, or a third moment, or a fourth moment. As shown in FIG. 8, a duration between $n+T_B$ and n+PDB is not less than a sum of duration required for decoding SCI and duration required for resource selection and/or resource re-selection. For another example, a duration between $n+T_B$ and n+PDB is not less than a sum of duration required for decoding SCI, duration required for resource selection and/or resource re-selection, and minimum duration of the selection window. In FIG. 8, Min sensing window length is the minimum duration of the sensing window, Min selection window length is the minimum duration of the selection window, selection preparation is duration required for resource selection and/or resource re-selection, and SCI Decoding is duration required for decoding SCI. Further, the SCI includes at least one of a first-stage SCI and a second-stage SCI, for example, SCI format 1-x and/or SCI form 2-y, where x and y are numbers or letters.

The duration required for decoding SCI and the duration required for resource selection and/or resource re-selection may be replaced by $T_{proc,1}^{SL} + T_{proc,0}^{SL}$ ). Further, optionally, at least one of the following is met:

reference may be made to Table 2 for $T_{proc,1}^{SL}$ limitation, and reference may be made to Table 1 for $T_{proc,0}^{SL}$ limitation.

It should be noted that, in the sidelink resource processing method provided in the embodiments of this application, an execution body may be a sidelink resource processing apparatus, or a module for performing and loading the sidelink resource processing method in the sidelink resource processing apparatus. In the embodiments of this application, an example in which the sidelink resource processing apparatus executes and loads the sidelink resource processing method is used to describe the sidelinke resource processing method provided in the embodiments of this application.

An embodiment of this application provides a sidelink resource processing apparatus, which is applied to a terminal 300. As shown in FIG. 9, the apparatus includes:

an obtaining module 310, configured to obtain a target sidelink object, where first information about the target sidelink object meets a first condition, and the target sidelink object includes at least one of the following: a sensing window, a sensing resource, a selection window, and a candidate resource; and
a processing module 320, configured to perform resource sensing and/or resource selection on the target sidelink object.

In some embodiments, the first information includes at least one of the following:

a length of a time domain occupied by the target sidelink object;
a maximum length of a time domain occupied by the target sidelink object;
a minimum length of a time domain occupied by the target sidelink object;
a quantity of resources of the target sidelink object;
a maximum quantity of resources of the target sidelink object;
a minimum quantity of resources of the target sidelink object;
a start location of the target sidelink object;
an earliest resource of the target sidelink object;
information about an earliest moment of the target sidelink object;
a starting offset of the target sidelink object;
an end location of the target sidelink object;
a latest resource of the target sidelink object;
information about a latest moment of the target sidelink object; and
an end location offset of the target sidelink object.

In some embodiments, in a case that the terminal obtains first sub-information and second sub-information, the first sub-information includes information about the sensing window and/or the sensing resource, the second sub-information includes information about the selection window and/or the selected resource, and the first information adopts at least one of the following:

a minimum value in the first sub-information and the second sub-information;
a maximum value in the first sub-information and the second sub-information; and
a weighted sum of the first sub-information and the second sub-information.

In some embodiments, the first condition includes at least one of the following:

a duration between a start location of a first resource and a first moment is not less than first preset processing duration;
a duration between an earliest resource of a first resource and a first moment is not less than first preset processing duration;
a duration between an earliest moment of a first resource and a first moment is not less than first preset processing duration;
a duration between a start location of a second resource and a second moment is not less than second preset processing duration;
a duration between an earliest resource of a second resource and a second moment is not less than second preset processing duration;
a duration between an earliest moment of a second resource and a second moment is not less than second preset processing duration;
a duration between an end location of a first resource and a third moment is not less than third preset processing duration;

a duration between a latest resource of a first resource and a third moment is not less than third preset processing duration;

a duration between a latest moment of a first resource and a third moment is not less than third preset processing duration;

a duration between an end location of a second resource and a fourth moment is not less than fourth preset processing duration;

a duration between a latest resource of a second resource and a fourth moment is not less than fourth preset processing duration; or

a duration between a latest moment of a second resource and a fourth moment is not less than fourth preset processing duration, where

a sidelink resource includes the first resource and/or the second resource, the first resource includes the sensing window and/or the sensing resource, and the second resource includes the selection window and/or the candidate resource.

In some embodiments, in a case that at least part of the first resource do not meet at least one of the following conditions, the processing module 320 drops the at least part of the first resource that do not meet the conditions:

a duration between a start location of a first resource and a first moment is not less than first preset processing duration;

a duration between an earliest resource of a first resource and a first moment is not less than first preset processing duration;

a duration between an earliest moment of a first resource and a first moment is not less than first preset processing duration;

a duration between an end location of a first resource and a third moment is not less than third preset processing duration;

a duration between a latest resource of a first resource and a third moment is not less than third preset processing duration; or

the duration between the latest moment of the first resource and the third moment is not less than the third preset processing duration.

In some embodiments, in a case that at least part of the second resource do not meet at least one of the following conditions, the processing module 320 drops the at least part of the second resource that do not meet the conditions:

a duration between a start location of a second resource and a second moment is not less than second preset processing duration;

a duration between an earliest resource of a second resource and a second moment is not less than second preset processing duration;

a duration between an earliest moment of a second resource and a second moment is not less than second preset processing duration;

a duration between an end location of a second resource and a fourth moment is not less than fourth preset processing duration;

a duration between a latest resource of a second resource and a fourth moment is not less than fourth preset processing duration; or

the duration between the latest moment of the second resource and the fourth moment is not less than the fourth preset processing duration.

In some embodiments, the first moment adopts at least one of the following:

a fifth moment, located after a moment n, where duration between the fifth moment and the moment n is a packet delay budget PDB;

a sixth moment, located after a moment n, where duration between the sixth moment and the moment n is a remaining PDB;

a moment when resource selection is triggered;

a moment when resource re-selection is triggered;

an earliest moment when resource selection is triggered;

an earliest moment when resource re-selection is triggered;

a latest moment when resource selection is triggered;

a latest moment when resource re-selection is triggered;
a moment when resource dropping is triggered;
an earliest moment when resource dropping is triggered;
a latest moment when resource dropping is triggered; and
moment information corresponding to the second resource, where the moment information includes one of the following: the start location, the earliest resource, the earliest moment, the end location, the latest resource, and the latest moment.

In some embodiments, the second moment or the fourth moment is moment information corresponding to the first resource, where the moment information includes one of the following: the start location, the earliest resource, the earliest moment, the end location, the latest resource, and the latest moment.

In some embodiments, the third moment adopts one of the following:

a fifth moment, located after a moment n, where duration between the fifth moment and the moment n is a PDB;
a sixth moment, located after a moment n, where duration between the sixth moment and the moment n is a remaining PDB;
a moment when resource selection is triggered;
a moment when resource re-selection is triggered;
an earliest moment when resource selection is triggered;
an earliest moment when resource re-selection is triggered;
a latest moment when resource selection is triggered;
a latest moment when resource re-selection is triggered;
a moment when resource dropping is triggered;
an earliest moment when resource dropping is triggered;
a latest moment when resource dropping is triggered; and
moment information corresponding to the first resource, where the moment information includes one of the following: the start location, the earliest resource, the earliest moment, the end location, the latest resource, and the latest moment.

In some embodiments, at least one of the first preset processing duration, the second preset processing duration, the third preset processing duration, and the fourth preset processing duration includes at least one of the following, and/or, is not less than one of the following or a sum of at least two of the following:

first duration is greater than or equal to time required for decoding sidelink control information SCI or a physical sidelink control channel PSCCH; or
second duration is greater than or equal to time required for resource selection and/or resource re-selection.

In some embodiments, the first preset processing duration further includes at least one of the following, and/or, is not less than one of the following or a sum of at least two of the following:

a length of a time domain occupied by the second resource;
a maximum length of a time domain occupied by the second resource;
a minimum length of a time domain occupied by the second resource;
a quantity of resources of the second resource;
a maximum quantity of resources of the second resource; and
a minimum quantity of resources of the second resource.

In some embodiments, the second preset processing duration further includes at least one of the following, and/or, is not less than one of the following or a sum of at least two of the following:

a length of a time domain occupied by the first resource;
a maximum length of a time domain occupied by the first resource;
a minimum length of a time domain occupied by the first resource;
a quantity of resources of the first resource;
a maximum quantity of resources of the first resource; and
a minimum quantity of resources of the first resource.

In some embodiments, the third preset processing duration and/or the fourth preset processing duration further include at least one of the following, and/or, are not less than one of the following or a sum of at least two of the following:

> a length of a time domain occupied by the first resource;
> a maximum length of a time domain occupied by the first resource;
> a minimum length of a time domain occupied by the first resource;
> a quantity of resources of the first resource;
> a maximum quantity of resources of the first resource; and
> a minimum quantity of resources of the first resource;
> a length of a time domain occupied by the second resource;
> a maximum length of a time domain occupied by the second resource;
> a minimum length of a time domain occupied by the second resource;
> a quantity of resources of the second resource;
> a maximum quantity of resources of the second resource; and
> a minimum quantity of resources of the second resource.

In some embodiments, at least one of the first preset processing duration, the second preset processing duration, the third preset processing duration, and the fourth preset processing duration includes at least one of the following, and/or, is not less than one of the following or a sum of at least two of the following:

> time required for decoding SCI;
> time required for resource selection and/or resource re-selection;
> congestion control processing time;
> PSSCH data transmission preparation time; and
> preparation time for reporting on a physical uplink control channel PUCCH or a physical uplink shared channel PUSCH.

In some embodiments, the first information is configured by a network-side device, or defined by a protocol, or pre-configured, or supported by the terminal, or determined based on a preset parameter.

In some embodiments, the preset parameter adopts at least one of the following:

> processing time of a specific channel or of a specific signal or of a specific operation;
> determined based on a PDB;
> determined based on a remaining PDB;
> a measurement quantity;
> a statistic quantity;
> determined based on a geographic location;
> determined based on quality of service QOS;
> determined based on a priority;
> determined based on a communication distance;
> a cast type;
> determined based on whether there is a radio resource control RRC connection;
> determined based on whether the terminal obtains a scheduled or recommended resource;
> determined based on a relationship between a first time point and a discontinuous reception DRX configuration, where the first time point is a time point at which resource selection or resource re-selection or resource re-evaluation or resource pre-emption is triggered;
> determined based on a configuration of a logical channel;
> determined based on a configuration of higher layer signaling;
> determined based on a hybrid automatic repeat request HARQ configuration; or
> determined based on a power saving configuration.

In some embodiments, when a value or a value range or content of the preset parameter is different, a value of the first information is also different.

In some embodiments, the sensing window is a short term sensing window, and/or the sensing resource is a resource within the short term sensing window.

In some embodiments, the sensing window includes a short term sensing window and a preset quantity of partial sensing windows, and/or the sensing resource is a resource within the sensing window.

The sidelink resource processing apparatus in this embodiment of this application may be an apparatus, an apparatus or an electronic device having an operating system, or may be a component, an integrated circuit, or a chip in a terminal. The apparatus or the electronic device may be a mobile terminal or may be a non-mobile terminal. For example, the mobile terminal may include, but is not limited to, the types of terminal 11 listed above, and the non-mobile terminal may be a server, a network attached storage (Network Attached Storage, NAS), a personal computer (Personal Computer, PC), a television (Television, TV), a teller machine, or a self-service machine, which are not specifically limited in the embodiments of this application.

The sidelink resource processing apparatus provided in this embodiment of this application can implement all processes implemented by the method embodiments of FIG. 6, and the same technical effects are achieved. To avoid repetition, details are not described herein again.

An embodiment of this application provides a sidelink resource indication apparatus, which is applied to a network-side device 400. As shown in FIG. 10, the apparatus includes:

a configuration module 410, configured to configure a target sidelink object for a terminal, where the target sidelink object includes at least one of the following: a sensing window, a sensing resource, a selection window, and a candidate resource, and first information about the target sidelink object meets a first condition.

In some embodiments, the first information includes at least one of the following:

a length of a time domain occupied by the target sidelink object;
a maximum length of a time domain occupied by the target sidelink object;
a minimum length of a time domain occupied by the target sidelink object;
a quantity of resources of the target sidelink object;
a maximum quantity of resources of the target sidelink object;
a minimum quantity of resources of the target sidelink object;
a start location of the target sidelink object;
an earliest resource of the target sidelink object;
information about an earliest moment of the target sidelink object;
a starting offset of the target sidelink object;
an end location of the target sidelink object;
a latest resource of the target sidelink object;
information about a latest moment of the target sidelink object; and
an end location offset of the target sidelink object.

In some embodiments, the configuration module 410 is further configured to send a first condition of the target sidelink object to the terminal, and the first condition includes at least one of the following:

a duration between a start location of a first resource and a first moment is not less than first preset processing duration;
a duration between an earliest resource of a first resource and a first moment is not less than first preset processing duration;
a duration between an earliest moment of a first resource and a first moment is not less than first preset processing duration;
a duration between a start location of a second resource and a second moment is not less than second preset processing duration;
a duration between an earliest resource of a second resource and a second moment is not less than second preset processing duration;
a duration between an earliest moment of a second resource and a second moment is not less than second preset processing duration;
a duration between an end location of a first resource and a third moment is not less than third preset processing duration;
a duration between a latest resource of a first resource and a third moment is not less than third preset processing duration;
a duration between a latest moment of a first resource and a third moment is not less than third preset processing duration;
a duration between an end location of a second resource and a fourth moment is not less than fourth preset processing duration;
a duration between a latest resource of a second resource and a fourth moment is not less than fourth preset processing duration; or
a duration between a latest moment of a second resource and a fourth moment is not less than fourth preset processing duration, where
a sidelink resource includes the first resource and/or the second resource, the first resource includes the sensing window and/or the sensing resource, and the second resource includes the selection window and/or the candidate resource.

The sidelink resource indication apparatus provided in this embodiment of this application can implement all processes implemented by the method embodiments of FIG. 7, and the same technical effects are achieved. To avoid repetition, details are not described herein again.

Optionally, as shown in FIG. 11, an embodiment of this application further provides a communication device 500, including a processor 501, a memory 502, and a program or instructions stored on the memory 502 and executable on the processor 501. For example, when the communication device 500 is a terminal, the program or the instructions, when executed by the processor 501, implements all processes of the foregoing sidelink resource processing method embodiments that are applied to the terminal, and can achieve the same technical effects. When the communication device 500 is a network-side device, the program or the instructions, when executed by the processor 501, implements all processes of the foregoing sidelink resource indication method embodiments that are applied to the network-side device, and the same technical effects can be achieved. To avoid repetition, details are not described herein again.

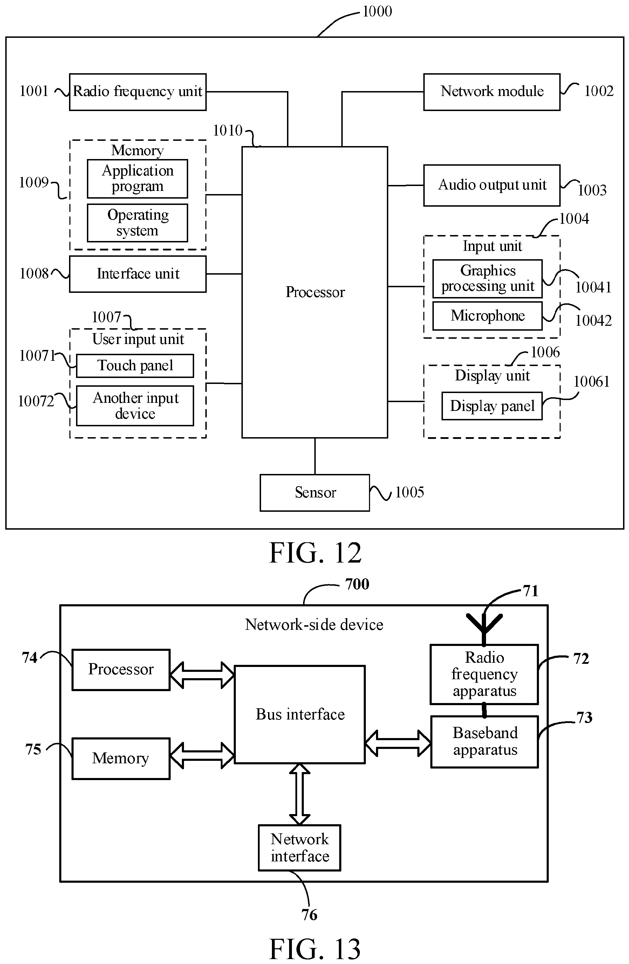

An embodiment of this application further provides a terminal, including a processor and a communication interface. The communication interface is configured to obtain a target sidelink object, where first information about the target sidelink object meets a first condition, and the target sidelink object includes at least one of the following: a sensing window, a sensing resource, a selection window, and a candidate resource. The processor is configured to perform resource sensing and/or resource selection on the target sidelink object. The terminal embodiment corresponds to the above terminal side method embodiment, and the various implementation processes and implementations of the above method embodiments can be applied to the terminal embodiment, and can achieve the same technical effects. Specifically, FIG. 12 is a schematic diagram of a hardware structure of a terminal that implements the embodiments of this application.

The terminal 1000 includes, but is not limited to, at least some components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 further includes a power supply (such as a battery) for supplying power to the components. The power supply may logically connect to the processor 1010 by using a power supply management system, thereby implementing functions, such as charging, discharging, and power consumption management, by using the power supply management system. A terminal structure shown in FIG. 12 does not constitute a limitation to the terminal, and the terminal may include more or fewer components than those shown in the figure, or some components may be combined, or a different component deployment may be used. Details are not described herein again.

It should be understood that, in the embodiments of this application, the input unit 1004 may include a graphics processing unit (Graphics Processing Unit, GPU) 10041 and a microphone 10042. The graphics processing unit 10041 performs processing on image data of a static picture or a video that is obtained by an image acquisition apparatus (for example, a camera) in a video acquisition mode or an image acquisition mode. The display unit 1006 may include a display panel 10061, for example, the display panel 10061 may be configured in a form such as a liquid crystal display or an organic light-emitting diode. The user input unit 1007 includes a touch panel 10071 and another input device 10072. The touch panel 10071 is also referred to as a touch screen. The touch panel 10071 may include two parts: a touch sensing apparatus and a touch controller. The another input device 10072 may include, but is not limited to, a physical keyboard, a functional key (such as a volume control key or a switch key), a track ball, a mouse, and a joystick, and details are not described herein again.

In the embodiments of this application, the radio frequency unit 1001 receives downlink data from a network-side device and sends the downlink data to the processor 1010 for processing; and sends uplink data to the network-side device. Generally, the radio frequency unit 1001 includes, but is not limited to, an antenna, at least one amplifier, a transceiver, a coupler, a low noise amplifier, a duplexer, and the like.

The memory 1009 may be configured to store a software program or instructions and various data. The memory 1009 may mainly include a program or instruction storage region and a data storage region. The program or instruction storage region may store an operating system, an application program or instructions required by at least one function (for example, a sound playback function and an image playback function), or the like. In addition, the memory 1009 may include a high-speed random access memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, the non-volatile memory may be at least one magnetic disk storage device, a flash memory device, or another non-volatile solid-state storage device.

The processor 1010 may include one or more processing units. Optionally, the processor 1010 may integrate an application processor and a modem processor. The application processor mainly processes an operating system, a user interface, an application program or instructions, and the like. The modem processor mainly processes wireless communication, for example, a baseband processor. It may be understood that, the modem processor may not be integrated into the processor 1010.

The processor 1010 is configured to obtain a target sidelink object, first information about the target sidelink object meets a first condition, and the target sidelink object includes at least one of the following: a sensing window, a sensing resource, a selection window, and a candidate resource; and perform resource sensing and/or resource selection on the target sidelink object.

In some embodiments, the first information includes at least one of the following:

a length of a time domain occupied by the target sidelink object;
a maximum length of a time domain occupied by the target sidelink object;
a minimum length of a time domain occupied by the target sidelink object;
a quantity of resources of the target sidelink object;
a maximum quantity of resources of the target sidelink object;
a minimum quantity of resources of the target sidelink object;
a start location of the target sidelink object;
an earliest resource of the target sidelink object;
information about an earliest moment of the target sidelink object;
a starting offset of the target sidelink object;
an end location of the target sidelink object;
a latest resource of the target sidelink object;
information about a latest moment of the target sidelink object; and
an end location offset of the target sidelink object.

In some embodiments, in a case that the terminal obtains first sub-information and second sub-information, the first sub-information includes information about the sensing window and/or the sensing resource, the second sub-information includes information about the selection window and/or the selected resource, and the first information adopts at least one of the following:

a minimum value in the first sub-information and the second sub-information;
a maximum value in the first sub-information and the second sub-information; and
a weighted sum of the first sub-information and the second sub-information.

In some embodiments, the first condition includes at least one of the following:

a duration between a start location of a first resource and a first moment is not less than first preset processing duration;
a duration between an earliest resource of a first resource and a first moment is not less than first preset processing duration;
a duration between an earliest moment of a first resource and a first moment is not less than first preset processing duration;
a duration between a start location of a second resource and a second moment is not less than second preset processing duration;
a duration between an earliest resource of a second resource and a second moment is not less than second preset processing duration;
a duration between an earliest moment of a second resource and a second moment is not less than second preset processing duration;
a duration between an end location of a first resource and a third moment is not less than third preset processing duration;
a duration between a latest resource of a first resource and a third moment is not less than third preset processing duration;
a duration between a latest moment of a first resource and a third moment is not less than third preset processing duration;
a duration between an end location of a second resource and a fourth moment is not less than fourth preset processing duration;
a duration between a latest resource of a second resource and a fourth moment is not less than fourth preset processing duration; or
a duration between a latest moment of a second resource and a fourth moment is not less than fourth preset processing duration, where
a sidelink resource includes the first resource and/or the second resource, the first resource includes the sensing window and/or the sensing resource, and the second resource includes the selection window and/or the candidate resource.

In some embodiments, in a case that at least part of the first resource do not meet at least one of the following conditions, the processor 1010 drops the at least part of the first resource that do not meet the conditions:

a duration between a start location of a first resource and a first moment is not less than first preset processing duration;
a duration between an earliest resource of a first resource and a first moment is not less than first preset processing duration;
a duration between an earliest moment of a first resource and a first moment is not less than first preset processing duration;
a duration between an end location of a first resource and a third moment is not less than third preset processing duration;
a duration between a latest resource of a first resource and a third moment is not less than third preset processing duration; or
the duration between the latest moment of the first resource and the third moment is not less than the third preset processing duration.

In some embodiments, in a case that at least part of the first resource do not meet at least one of the following conditions, the processor 1010 drops the at least part of the first resource that do not meet the conditions:

a duration between a start location of a second resource and a second moment is not less than second preset processing duration;
a duration between an earliest resource of a second resource and a second moment is not less than second preset processing duration;
a duration between an earliest moment of a second resource and a second moment is not less than second preset processing duration;
a duration between an end location of a second resource and a fourth moment is not less than fourth preset processing duration;
a duration between a latest resource of a second resource and a fourth moment is not less than fourth preset processing duration; or
the duration between the latest moment of the second resource and the fourth moment is not less than the fourth preset processing duration.

In some embodiments, the first moment adopts at least one of the following:

a fifth moment, located after a moment n, where duration between the fifth moment and the moment n is a packet delay budget PDB;
a sixth moment, located after a moment n, where duration between the sixth moment and the moment n is a remaining PDB;
a moment when resource selection is triggered;
a moment when resource re-selection is triggered;
an earliest moment when resource selection is triggered;
an earliest moment when resource re-selection is triggered;
a latest moment when resource selection is triggered;
a latest moment when resource re-selection is triggered;
a moment when resource dropping is triggered;
an earliest moment when resource dropping is triggered;
a latest moment when resource dropping is triggered; and
moment information corresponding to the second resource, where the moment information includes one of the following: the start location, the earliest resource, the earliest moment, the end location, the latest resource, and the latest moment.

In some embodiments, the second moment or the fourth moment is moment information corresponding to the first resource, where the moment information includes one of the following: the start location, the earliest resource, the earliest moment, the end location, the latest resource, and the latest moment.

In some embodiments, the third moment adopts one of the following:

a fifth moment, located after a moment n, where duration between the fifth moment and the moment n is a PDB;

a sixth moment, located after a moment n, where duration between the sixth moment and the moment n is a remaining PDB;

a moment when resource selection is triggered;

a moment when resource re-selection is triggered;

an earliest moment when resource selection is triggered;

an earliest moment when resource re-selection is triggered;

a latest moment when resource selection is triggered;

a latest moment when resource re-selection is triggered;

a moment when resource dropping is triggered;

an earliest moment when resource dropping is triggered;

a latest moment when resource dropping is triggered; and

moment information corresponding to the first resource, where the moment information includes one of the following: the start location, the earliest resource, the earliest moment, the end location, the latest resource, and the latest moment.

In some embodiments, at least one of the first preset processing duration, the second preset processing duration, the third preset processing duration, and the fourth preset processing duration includes at least one of the following, and/or, is not less than one of the following or a sum of at least two of the following:

first duration is greater than or equal to time required for decoding sidelink control information SCI or a physical sidelink control channel PSCCH; or

second duration is greater than or equal to time required for resource selection and/or resource re-selection.

In some embodiments, the first preset processing duration further includes at least one of the following, and/or, is not less than one of the following or a sum of at least two of the following:

a length of a time domain occupied by the second resource;

a maximum length of a time domain occupied by the second resource;

a minimum length of a time domain occupied by the second resource;

a quantity of resources of the second resource;

a maximum quantity of resources of the second resource; and

a minimum quantity of resources of the second resource.

In some embodiments, the second preset processing duration further includes at least one of the following, and/or, is not less than one of the following or a sum of at least two of the following:

a length of a time domain occupied by the first resource;

a maximum length of a time domain occupied by the first resource;

a minimum length of a time domain occupied by the first resource;

a quantity of resources of the first resource;

a maximum quantity of resources of the first resource; and

a minimum quantity of resources of the first resource.

In some embodiments, the third preset processing duration and/or the fourth preset processing duration further include at least one of the following, and/or, are not less than one of the following or a sum of at least two of the following:

a length of a time domain occupied by the first resource;

a maximum length of a time domain occupied by the first resource;

a minimum length of a time domain occupied by the first resource;

a quantity of resources of the first resource;

a maximum quantity of resources of the first resource;

a minimum quantity of resources of the first resource;

a length of a time domain occupied by the second resource;

a maximum length of a time domain occupied by the second resource;

a minimum length of a time domain occupied by the second resource;

a quantity of resources of the second resource;

a maximum quantity of resources of the second resource; and

a minimum quantity of resources of the second resource.

In some embodiments, at least one of the first preset processing duration, the second preset processing duration, the third preset processing duration, and the fourth preset processing duration includes at least one of the following, and/or, is not less than one of the following or a sum of at least two of the following:

time required for decoding SCI;
time required for resource selection and/or resource re-selection;
congestion control processing time;
PSSCH data transmission preparation time; and
preparation time for reporting on a physical uplink control channel PUCCH or a physical uplink shared channel PUSCH.

In some embodiments, the first information is configured by a network-side device, or defined by a protocol, or pre-configured, or supported by the terminal, or determined based on a preset parameter.
In some embodiments, the preset parameter adopts at least one of the following:

processing time of a specific channel or of a specific signal or of a specific operation;
determined based on a PDB;
determined based on a remaining PDB;
a measurement quantity;
a statistic quantity;
determined based on a geographic location;
determined based on quality of service QOS;
determined based on a priority;
determined based on a communication distance;
a cast type;
determined based on whether there is a radio resource control RRC connection;
determined based on whether the terminal obtains a scheduled or recommended resource;
determined based on a relationship between a first time point and a discontinuous reception DRX configuration, where the first time point is a time point at which resource selection or resource re-selection or resource re-evaluation or resource pre-emption is triggered;
determined based on a configuration of a logical channel;
determined based on a configuration of higher layer signaling;
determined based on a hybrid automatic repeat request HARQ configuration; or
determined based on a power saving configuration.

In some embodiments, when a value or a value range or content of the preset parameter is different, a value of the first information is also different.
In some embodiments, the sensing window is a short term sensing window, and/or the sensing resource is a resource within the short term sensing window.
In some embodiments, the sensing window includes a short term sensing window and a preset quantity of partial sensing windows, and/or the sensing resource is a resource within the sensing window.
An embodiment of this application further provides a network-side device. The network-side device includes a processor and a communication interface. The communication interface is configured to configure a target sidelink object for a terminal, where the target sidelink object includes at least one of the following: a sensing window, a sensing resource, a selection window, and a candidate resource, and first information about the target sidelink object meets a first condition. The network-side device embodiment corresponds to the above network-side device method embodiment, and the various implementation processes and implementations of the above method embodiments can be applied to the network-side device embodiment, and can achieve the same technical effects.
Specifically, an embodiment of this application further provides a network-side device. As shown in FIG. 13, the network device 700 includes: an antenna 71, a radio frequency apparatus 72, and a baseband apparatus 73. The antenna 71 is connected to the radio frequency apparatus 72. In an uplink direction, the radio frequency apparatus 72 receives information through the antenna 71 and sends the received information to the baseband apparatus 73 for processing. In a downlink direction, the baseband apparatus 73 processes information that needs to be sent and sends the information to the radio frequency apparatus 72. The radio frequency apparatus 72 processes the received information and sends the received information through the antenna 71.
The baseband processing apparatus may be located in the baseband apparatus 73, and the method performed by the network-side device in the foregoing embodiments may be implemented in the baseband apparatus 73. The baseband apparatus 73 includes a processor 74 and a memory 75.

The baseband apparatus 73 may, for example, include at least one baseband plate, and a plurality of chips are disposed on the baseband plate. As shown in FIG. 13, one of the plurality of chips is, for example, the processor 74, connected to the memory 75 to invoke a program in the memory 75, to perform a network device operation shown in the foregoing method embodiments.

The baseband apparatus 73 may further include a network interface 76, configured to exchange information with the radio frequency apparatus 72. The interface is, for example, a common public radio interface (Common Public Radio Interface, CPRI).

Specifically, the network-side device in the embodiments of this application further includes instructions or a program stored in the memory 75 and executable on the processor 74. The processor 74 invokes the instructions or the program in the memory 75 to perform the methods performed by the modules shown in FIG. 10, and achieves the same technical effects. To avoid repetition, details are not described herein again.

An embodiment of this application further provides a readable storage medium. The readable storage medium may be non-volatile or volatile. The readable storage medium stores a program or instructions. The program or instructions, when executed by a processor, implements all processes of the embodiments of the foregoing sidelink resource processing method or sidelink resource processing indication method, and can achieve the same technical effects. To avoid repetition, details are not described herein again.

The processor is a processor in the terminal in the foregoing embodiments. The readable storage medium includes a computer-readable storage medium, for example, a read-only memory (Read-Only Memory, ROM), a random access memory (Random Access Memory, RAM), a magnetic disk, or an optical disc.

An embodiment of this application further provides a chip. The chip includes a processor and a communication interface, where the communication interface is coupled to the processor, and the processor is configured to run a program or instructions, to implement all processes of the embodiments of the foregoing sidelink resource processing method or sidelink resource processing indication method, and can achieve the same technical effects. To avoid repetition, details are not described herein again.

It should be understood that, the chip described in the embodiments of this application may also be referred to as a system-level chip, a system chip, a chip system, a system on chip, or the like.

An embodiment of this application further provides a computer program product, where the computer program product is stored in a non-volatile readable storage medium. The computer program product is executed by at least one processor to implement all processes of the embodiments of the foregoing sidelink resource processing method or sidelink resource processing indication method, and can achieve the same technical effects. To avoid repetition, details are not described herein again.

It should be noted that the terms "include", "comprise", or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. In addition, it should be pointed out that the scope of the methods and apparatuses in the embodiments of this application is not limited to performing the functions in the order shown or discussed, and it may further include performing the functions in basically the same way or in the opposite order according to the functions involved, for example, the described methods may be performed in a different order from the described ones, and various steps can also be added, omitted, or combined. In addition, features described with reference to some examples may be combined in other examples.

Through the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions in this application essentially or the part contributing to the reflected technologies may be implemented in the form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the foregoing specific embodiments, which are merely illustrative rather than limited. Under the inspiration of this application, a person of ordinary skill in the art may make various variations without departing from the scope of this application and the protection of the claims, and such variations shall fall within the protection of this application.

**Claims**

1. A sidelink resource processing method, comprising:

   obtaining, by a terminal, a target sidelink object, wherein first information about the target sidelink object meets a first condition, and the target sidelink object comprises at least one of following: a sensing window, a sensing resource, a selection window, and a candidate resource; and
   performing, by the terminal, resource sensing and/or resource selection on the target sidelink object.

2. The sidelink resource processing method according to claim 1, wherein the first information comprises at least one of following:

   a length of a time domain occupied by the target sidelink object;
   a maximum length of a time domain occupied by the target sidelink object;
   a minimum length of a time domain occupied by the target sidelink object;
   a quantity of resources of the target sidelink object;
   a maximum quantity of resources of the target sidelink object;
   a minimum quantity of resources of the target sidelink object;
   a start location of the target sidelink object;
   an earliest resource of the target sidelink object;
   information about an earliest moment of the target sidelink object;
   a starting offset of the target sidelink object;
   an end location of the target sidelink object;
   a latest resource of the target sidelink object;
   information about a latest moment of the target sidelink object; and
   an end location offset of the target sidelink object.

3. The sidelink resource processing method according to claim 1, wherein in a case that the terminal obtains first sub-information and second sub-information, the first sub-information comprises information about the sensing window and/or the sensing resource, the second sub-information comprises information about the selection window and/or the selected resource, and the first information adopts at least one of following:

   a minimum value in the first sub-information and the second sub-information;
   a maximum value in the first sub-information and the second sub-information; and
   a weighted sum of the first sub-information and the second sub-information.

4. The sidelink resource processing method according to claim 1, wherein the first condition comprises at least one of following:

   a duration between a start location of a first resource and a first moment is not less than first preset processing duration;
   a duration between an earliest resource of a first resource and a first moment is not less than first preset processing duration;
   a duration between an earliest moment of a first resource and a first moment is not less than first preset processing duration;
   a duration between a start location of a second resource and a second moment is not less than second preset processing duration;
   a duration between an earliest resource of a second resource and a second moment is not less than second preset processing duration;
   a duration between an earliest moment of a second resource and a second moment is not less than second preset processing duration;
   a duration between an end location of a first resource and a third moment is not less than third preset processing duration;
   a duration between a latest resource of a first resource and a third moment is not less than third preset processing duration;
   a duration between a latest moment of a first resource and a third moment is not less than third preset processing duration;
   a duration between an end location of a second resource and a fourth moment is not less than fourth preset processing duration;

a duration between a latest resource of a second resource and a fourth moment is not less than fourth preset processing duration; or

a duration between a latest moment of a second resource and a fourth moment is not less than fourth preset processing duration, wherein

a sidelink resource comprises the first resource and/or the second resource, the first resource comprises the sensing window and/or the sensing resource, and the second resource comprises the selection window and/or the candidate resource.

5. The sidelink resource processing method according to claim 4, wherein in a case that at least part of the first resource do not meet at least one of following conditions, the at least part of the first resource meetare dropped:

the duration between the start location of the first resource and the first moment is not less than the first preset processing duration;

the duration between the earliest resource of the first resource and the first moment is not less than the first preset processing duration;

the duration between the earliest moment of the first resource and the first moment is not less than the first preset processing duration;

the duration between the end location of the first resource and the third moment is not less than the third preset processing duration;

the duration between the latest resource of the first resource and the third moment is not less than the third preset processing duration; or

the duration between the latest moment of the first resource and the third moment is not less than the third preset processing duration.

6. The sidelink resource processing method according to claim 4, wherein in a case that at least part of the second resource do not meet at least one of following conditions, the at least part of the second resource are dropped:

the duration between the start location of the second resource and the second moment is not less than the second preset processing duration;

the duration between the earliest resource of the second resource and the second moment is not less than the second preset processing duration;

the duration between the earliest moment of the second resource and the second moment is not less than the second preset processing duration;

the duration between the end location of the second resource and the fourth moment is not less than the fourth preset processing duration;

the duration between the latest resource of the second resource and the fourth moment is not less than the fourth preset processing duration; or

the duration between the latest moment of the second resource and the fourth moment is not less than the fourth preset processing duration.

7. The sidelink resource processing method according to any one of claims 4 to 6, wherein the first moment adopts at least one of following:

a fifth moment, located after a moment n, wherein duration between the fifth moment and the moment n is a packet delay budget PDB;

a sixth moment, located after a moment n, wherein duration between the sixth moment and the moment n is a remaining PDB;

a moment when resource selection is triggered;

a moment when resource re-selection is triggered;

an earliest moment when resource selection is triggered;

an earliest moment when resource re-selection is triggered;

a latest moment when resource selection is triggered;

a latest moment when resource re-selection is triggered;

a moment when resource dropping is triggered;

an earliest moment when resource dropping is triggered;

a latest moment when resource dropping is triggered; and

moment information corresponding to the second resource, wherein the moment information comprises one of following: a start location, an earliest resource, an earliest moment, an end location, a latest resource, and a latest moment.

8. The sidelink resource processing method according to any one of claims 4 to 6, wherein the second moment or the fourth moment is moment information corresponding to the first resource, and the moment information comprises one of following: a start location, an earliest resource, an earliest moment, an end location, a latest resource, a the latest moment.

9. The sidelink resource processing method according to any one of claims 4 to 6, wherein the third moment adopts one of following:

a fifth moment, located after a moment n, wherein duration between the fifth moment and the moment n is a PDB;
a sixth moment, located after a moment n, wherein duration between the sixth moment and the moment n is a remaining PDB;
a moment when resource selection is triggered;
a moment when resource re-selection is triggered;
an earliest moment when resource selection is triggered;
an earliest moment when resource re-selection is triggered;
a latest moment when resource selection is triggered;
a latest moment when resource re-selection is triggered;
a moment when resource dropping is triggered;
an earliest moment when resource dropping is triggered;
a latest moment when resource dropping is triggered; and
moment information corresponding to the first resource, wherein the moment information comprises one of following: a start location, an earliest resource, an earliest moment, an end location, a latest resource, and a latest moment.

10. The sidelink resource processing method according to any one of claims 4 to 6, wherein at least one of the first preset processing duration, the second preset processing duration, the third preset processing duration, and the fourth preset processing duration comprises at least one of following, and/or, is not less than one of the following or a sum of at least two of the following:

first duration that is time required for decoding sidelink control information SCI or a physical sidelink control channel PSCCH; or
second duration that is time required for resource selection and/or resource re-selection.

11. The sidelink resource processing method according to claim 10, wherein the first preset processing duration further comprises at least one of the following, and/or, is not less than one of the following or a sum of at least two of the following:

a length of a time domain occupied by the second resource;
a maximum length of a time domain occupied by the second resource;
a minimum length of a time domain occupied by the second resource;
a quantity of resources of the second resource;
a maximum quantity of resources of the second resource; and
a minimum quantity of resources of the second resource.

12. The sidelink resource processing method according to claim 10, wherein the second preset processing duration further comprises at least one of following, and/or, is not less than one of the following or a sum of at least two of the following:

a length of a time domain occupied by the first resource;
a maximum length of a time domain occupied by the first resource;
a minimum length of a time domain occupied by the first resource;
a quantity of resources of the first resource;
a maximum quantity of resources of the first resource; or
a minimum quantity of resources of the first resource.

**13.** The sidelink resource processing method according to claim 10, wherein the third preset processing duration and/or the fourth preset processing duration further comprises at least one of following, and/or, is not less than one of the following or a sum of at least two of the following:

a length of a time domain occupied by the first resource;
a maximum length of a time domain occupied by the first resource;
a minimum length of a time domain occupied by the first resource;
a quantity of resources of the first resource;
a maximum quantity of resources of the first resource;
a minimum quantity of resources of the first resource;
a length of a time domain occupied by the second resource;
a maximum length of a time domain occupied by the second resource;
a minimum length of a time domain occupied by the second resource;
a quantity of resources of the second resource;
a maximum quantity of resources of the second resource; and
a minimum quantity of resources of the second resource.

**14.** The sidelink resource processing method according to any one of claims 4 to 6, wherein at least one of the first preset processing duration, the second preset processing duration, the third preset processing duration, and the fourth preset processing duration comprises at least one of following, and/or, is not less than one of the following or a sum of at least two of the following:

time required for decoding SCI;
time required for resource selection and/or resource re-selection;
congestion control processing time;
PSSCH data transmission preparation time; and
preparation time for reporting on a physical uplink control channel PUCCH or a physical uplink shared channel PUSCH.

**15.** The sidelink resource processing method according to claim 1, wherein the first information is configured by a network-side device, or defined by a protocol, or pre-configured, or supported by the terminal, or determined based on a preset parameter.

**16.** The sidelink resource processing method according to claim 15, wherein the preset parameter adopts at least one of following:

processing time of a specific channel or of a specific signal or of a specific operation;
determined based on a PDB;
determined based on a remaining PDB;
a measurement quantity;
a statistic quantity;
determined based on a geographic location;
determined based on quality of service QOS;
determined based on a priority;
determined based on a communication distance;
a cast type;
determined based on whether there is a radio resource control RRC connection;
determined based on whether the terminal obtains a scheduled or recommended resource;
determined based on a relationship between a first time point and a discontinuous reception DRX configuration, wherein the first time point is a time point at which resource selection or resource re-selection or resource re-evaluation or resource pre-emption is triggered;
determined based on a configuration of a logical channel;
determined based on a configuration of higher layer signaling;
determined based on a hybrid automatic repeat request HARQ configuration; or
determined based on a power saving configuration.

**17.** The sidelink resource processing method according to claim 15, wherein when a value or a value range or content of the preset parameter is different, a value of the first information is also different.

18. The sidelink resource processing method according to claim 1, wherein the sensing window is a short term sensing window, and/or the sensing resource is a resource within the short term sensing window.

19. The sidelink resource processing method according to claim 1, wherein the sensing window comprises a short term sensing window and a preset quantity of partial sensing windows, and/or the sensing resource is a resource within the sensing window.

20. A sidelink resource indication method, comprising:
configuring, by a network-side device, a target sidelink object for a terminal, wherein the target sidelink object comprises at least one of following: a sensing window, a sensing resource, a selection window, and a candidate resource, and first information about the target sidelink object meets a first condition.

21. The sidelink resource indication method according to claim 20, wherein the first information comprises at least one of following:

a length of a time domain occupied by the target sidelink object;
a maximum length of a time domain occupied by the target sidelink object;
a minimum length of a time domain occupied by the target sidelink object;
a quantity of resources of the target sidelink object;
a maximum quantity of resources of the target sidelink object;
a minimum quantity of resources of the target sidelink object;
a start location of the target sidelink object;
an earliest resource of the target sidelink object;
information about an earliest moment of the target sidelink object;
a starting offset of the target sidelink object;
an end location of the target sidelink object;
a latest resource of the target sidelink object;
information about a latest moment of the target sidelink object; and
an end location offset of the target sidelink object.

22. The sidelink resource indication method according to claim 20, wherein the first condition comprises at least one of following:

a duration between a start location of a first resource and a first moment is not less than first preset processing duration;
a duration between an earliest resource of a first resource and a first moment is not less than first preset processing duration;
a duration between an earliest moment of a first resource and a first moment is not less than first preset processing duration;
a duration between a start location of a second resource and a second moment is not less than second preset processing duration;
a duration between an earliest resource of a second resource and a second moment is not less than second preset processing duration;
a duration between an earliest moment of a second resource and a second moment is not less than second preset processing duration;
a duration between an end location of a first resource and a third moment is not less than third preset processing duration;
a duration between a latest resource of a first resource and a third moment is not less than third preset processing duration;
a duration between a latest moment of a first resource and a third moment is not less than third preset processing duration;
a duration between an end location of a second resource and a fourth moment is not less than fourth preset processing duration;
a duration between a latest resource of a second resource and a fourth moment is not less than fourth preset processing duration;
a duration between a latest moment of a second resource and a fourth moment is not less than fourth preset processing duration, wherein
a sidelink resource comprises the first resource and/or the second resource, the first resource comprises the sensing window and/or the sensing resource, and the second resource comprises the selection window and/or the candidate resource.

23. A sidelink resource processing apparatus, applied to a terminal, the apparatus comprising:

an obtaining module, configured to obtain a target sidelink object, wherein first information about the target sidelink object meets a first condition, and the target sidelink object comprises at least one of following: a sensing window, a sensing resource, a selection window, and a candidate resource; and
a processing module, configured to perform resource sensing and/or resource selection on the target sidelink object.

24. The sidelink resource processing apparatus according to claim 23, wherein the first information comprises at least one of following:

a length of a time domain occupied by the target sidelink object;
a maximum length of a time domain occupied by the target sidelink object;
a minimum length of a time domain occupied by the target sidelink object;
a quantity of resources of the target sidelink object;
a maximum quantity of resources of the target sidelink object;
a minimum quantity of resources of the target sidelink object;
a start location of the target sidelink object;
an earliest resource of the target sidelink object;
information about an earliest moment of the target sidelink object;
a starting offset of the target sidelink object;
an end location of the target sidelink object;
a latest resource of the target sidelink object;
information about a latest moment of the target sidelink object; and
an end location offset of the target sidelink object.

25. The sidelink resource processing apparatus according to claim 23, wherein in a case that the terminal obtains first sub-information and second sub-information, the first sub-information comprises information about the sensing window and/or the sensing resource, the second sub-information comprises information about the selection window and/or the selected resource, and the first information adopts at least one of following:

a minimum value in the first sub-information and the second sub-information;
a maximum value in the first sub-information and the second sub-information; and
a weighted sum of the first sub-information and the second sub-information.

26. The sidelink resource processing apparatus according to claim 23, wherein the first condition comprises at least one of following:

a duration between a start location of a first resource and a first moment is not less than first preset processing duration;
a duration between an earliest resource of a first resource and a first moment is not less than first preset processing duration;
a duration between an earliest moment of a first resource and a first moment is not less than first preset processing duration;
a duration between a start location of a second resource and a second moment is not less than second preset processing duration;
a duration between an earliest resource of a second resource and a second moment is not less than second preset processing duration;
a duration between an earliest moment of a second resource and a second moment is not less than second preset processing duration;
a duration between an end location of a first resource and a third moment is not less than third preset processing duration;
a duration between a latest resource of a first resource and a third moment is not less than third preset processing duration;
a duration between a latest moment of a first resource and a third moment is not less than third preset processing duration;

a duration between an end location of a second resource and a fourth moment is not less than fourth preset processing duration;

a duration between a latest resource of a second resource and a fourth moment is not less than fourth preset processing duration;

a duration between a latest moment of a second resource and a fourth moment is not less than fourth preset processing duration, wherein

a sidelink resource comprises the first resource and/or the second resource, the first resource comprises the sensing window and/or the sensing resource, and the second resource comprises the selection window and/or the candidate resource.

27. A sidelink resource indication apparatus, applied to a network-side device, the apparatus comprising:
a configuration module, configured to configure a target sidelink object for a terminal, wherein the target sidelink object comprises at least one of following: a sensing window, a sensing resource, a selection window, and a candidate resource, and first information about the target sidelink object meets a first condition.

28. A terminal, comprising a processor, a memory, and a program or instructions stored on the memory and executable on the processor, the program or the instructions, when executed by the processor, implementing steps of the sidelink resource processing method according to any one of claims 1 to 19.

29. A network-side device, comprising a processor, a memory, and a program or instructions stored on the memory and executable on the processor, the program or the instructions, when executed by the processor, implementing steps of the sidelink resource indication method according to any one of claims 20 to 22.

30. A readable storage medium, storing a program or instructions, the program or instructions, when executed by a processor, implementing steps of the sidelink resource processing method according to any one of claims 1 to 19, or implementing steps of the sidelink resource indication method according to any one of claims 20 to 22.

31. A chip, comprising a processor and a communication interface, wherein the communication interface is coupled to the processor, and the processor is configured to run a program or instructions, to implement steps of the sidelink resource processing method according to any one of claims 1 to 19, or implement steps of the sidelink resource indication method according to any one of claims 20 to 22.

32. A computer program product, wherein the computer program product is stored in a non-volatile storage medium, and the computer program product is executed by at least one processor to implement steps of the sidelink resource processing method according to any one of claims 1 to 19, or implement steps of the sidelink resource indication method according to any one of claims 20 to 22.

33. A communication device, configured to perform steps of the sidelink resource processing method according to any one of claims 1 to 19, or perform steps of the sidelink resource indication method according to any one of claims 20 to 22.

FIG. 1

FIG. 2

FIG. 3

Partial sensing window  Short term sensing window  Selection window
(Partial sensing window)  (Short term sensing window)  (Selection window)

n    n+TA         n+TB                    t

## FIG. 4

m-T3   m

## FIG. 5

A terminal obtains a target sidelink object, where first information about the target sidelink object satisfies a first condition, and the target sidelink object includes at least one of the following: a sensing window, a sensing resource, a selection window, and a candidate resource — 101

The terminal performs resource sensing and/or resource selection on the target sidelink object — 102

## FIG. 6

A network-side device configures a target sidelink object for a terminal, where the target sidelink object includes at least one of the following: a sensing window, a sensing resource, a selection window, and a candidate resource, and first information about the target sidelink object satisfies a first condition — 201

## FIG. 7

Min sensing window    Duration    Min selection window
length (Min sensing   required for   length (Min selection
window length)     decoding     window length)
SCI

Duration required
for resource
selection and/or
resource re-
selection

n       n+TA          n+ TB          n + PDB

**FIG. 8**

300

Terminal

310             320

| Obtaining module | Processing module |

**FIG. 9**

400

Network-side device

410

Sending module

**FIG. 10**

500

Communication device

501             502

Processor             Memory

**FIG. 11**

FIG. 12

FIG. 13

## INTERNATIONAL SEARCH REPORT

| International application No. |
|---|
| **PCT/CN2022/084156** |

**A.    CLASSIFICATION OF SUBJECT MATTER**

H04W 28/26(2009.01)i

According to International Patent Classification (IPC) or to both national classification and IPC

**B.    FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNKI, CNPAT, WPI, EPODOC, 3GPP: 旁链路, 侧链路, 侧边链路, 直连链路, 感知窗, 感测窗, 检测窗, 侦听窗, 监听窗, 选择窗, 时间窗, 资源, 选择, 重选, 候选, 备选, 间隔, 时长, 时刻, 长度, sidelink, SL, sensing window, listening window, selection window, time window, resource, select, reselect, candidate, gap, interval, time, length

**C.    DOCUMENTS CONSIDERED TO BE RELEVANT**

| Category* | Citation of document, with indication, where appropriate, of the relevant passages | Relevant to claim No. |
|---|---|---|
| PX | CN 113498177 A (VIVO COMMUNICATION TECHNOLOGY CO., LTD.) 12 October 2021 (2021-10-12) <br> description, paragraphs 0059-0298, and 0541-0545, and figures 1-8 | 1-33 |
| X | CN 112272397 A (GOHIGH DATA NETWORKS TECHNOLOGY CO., LTD.) 26 January 2021 (2021-01-26) <br> description, paragraphs 0091-0174 and 0237-0272, and figures 2-4 | 1-33 |
| X | CN 111771388 A (BEIJING XIAOMI MOBILE SOFTWARE CO., LTD.) 13 October 2020 (2020-10-13) <br> description, paragraphs 0128-0141 and 0182-0190, and figures 4-5 | 1-33 |
| X | US 2020229171 A1 (INTEL CORP.) 16 July 2020 (2020-07-16) <br> description, paragraphs 0115-0163 and 0242-0246, and figures 1A-2B | 1-33 |
| X | SAMSUNG. "On Resource Allocation for NR V2X Mode 2." <br> *3GPP TSG RAN WG1 #98bis R1-1910471*, 20 October 2019 (2019-10-20), <br> section 2 | 1-33 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 June 2022** | **28 June 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/084156**

| Patent document cited in search report | | | Publication date (day/month/year) | Patent family member(s) | | | Publication date (day/month/year) |
|---|---|---|---|---|---|---|---|
| CN | 113498177 | A | 12 October 2021 | WO | 2021197316 | A1 | 07 October 2021 |
| CN | 112272397 | A | 26 January 2021 | None | | | |
| CN | 111771388 | A | 13 October 2020 | WO | 2021223192 | A1 | 11 November 2021 |
| US | 2020229171 | A1 | 16 July 2020 | IN | 202044013260 | A | 09 October 2020 |

Form PCT/ISA/210 (patent family annex) (January 2015)

**EP 4 301 037 A1**

## REFERENCES CITED IN THE DESCRIPTION

**Patent documents cited in the description**

- CN 202110341306